# EUROPEAN PATENT APPLICATION

(11) **EP 4 736 990 A1**
(43) Date of publication of application: **06.05.2026**
(21) Application number: 24209552.9
(22) Date of filing: 29.10.2024
(51) Int. Cl.: B01D 53/26, B60T 17/00

(54) **VEHICULAR AIR DRYER SYSTEM, AIR DRYER, PNEUMATIC VEHICLE SYSTEM AND VEHICLE**

(71) Applicant: ZF CV Systems Europe BV, 1170 Brüssel (BE)
(72) Inventor: ROBAK, Marek, 51-128 Wroclaw (PL); SEMENIUK, Maciej, 58-506 Wroclaw (PL)
(74) Representative: Copi, Joachim

(57) **Abstract**

The invention relates to a vehicular air dryer system (10), comprising:
- a dryer inlet (1) configured to receive air from a compressor discharge line (11),
- a dryer outlet (2) configured to supply dried air,
- a desiccant cartridge (22) configured to receive the air from the dryer inlet (1) via a dryer inlet line (1A) and to provide the dried air for outputting to the dryer outlet (2) via a dryer outlet line (28),
- a dryer exhaust (3),
- a pneumatically controlled valve assembly (30, 40) being configured to selectively exhaust air from the compressor discharge line (11) and/or from the desiccant cartridge (22) via the dryer exhaust (3), and
- a control valve assembly (59) configured to provide control pressure signals (CP1, CP2, CP3) to at least one of the pneumatically controlled valve assembly (30, 40) and a compressor (91) connected to the compressor discharge line (11).

Furthermore, the invention relates to an air dryer (20) for a vehicular air dryer system (10), to a pneumatic vehicle system (90) and to a vehicle (70).

## Description

The present disclosure relates to a vehicular air dryer system. Furthermore, the present disclosure relates to a an air dryer for a vehicular air dryer system, to a pneumatic vehicle system with a vehicular air dryer system and to a vehicle, in particular a commercial vehicle, comprising the pneumatic vehicle system.

Many vehicles comprise one or several pneumatic consumers, such as brake cylinders, height adjustment cylinders, and/or a sensor cleaning system, without being limited thereto. To provide compressed air to a pneumatic consumer system, a compressor may be provided. For various types of pneumatic consumers, it is desirable that the humidity of compressed air is reduced prior to providing the compressed air to the pneumatic consumer. A vehicular air dryer comprising a desiccant cartridge may be installed downstream of the compressor. Vehicular air dryer systems may be configured to provide a desiccant regeneration.

US 2013/0195682 A1 and EP 4 112 399 A1 disclose pneumatic vehicle systems that comprise an air dryer system with at least one pneumatically controlled valve.

Generally, the vehicular air dryer system may comprise an air dryer inlet configured to receive air from a compressor discharge line, a dryer outlet configured to supply dried air, a desiccant cartridge configured to receive the air from the dryer inlet via a dryer inlet line and to provide the dried air for outputting to the dryer outlet via a dryer outlet line, and a dryer exhaust. The vehicular air dryer system may be configured to be operated in a drying mode and in a regeneration mode. In the drying mode, a humid compressed air flow provided by the compressor may be guided through the desiccant cartridge, wherein the desiccant in the desiccant cartridge is configured to adsorb moisture from the humid compressed air flow. Since the desiccant may reach a saturated condition after having adsorbed a certain level of moisture, the desiccant cartridge may be regenerated in the regeneration mode. In the regeneration mode, a comparatively dry regeneration air flow is guided through the desiccant which consequently may desorb moisture to the regeneration air flow. The regeneration air flow may be guided through the desiccant cartridge in a reversed flow direction compared to the compressed air flow. The regeneration air flow may be vented via the dryer exhaust. The desiccant may, for instance, be a suitable adsorbent as e.g. zeolite. Since the desiccant may be prone to degradation, the desiccant cartridge may be configured to be exchangeable and may be replaced, for instance, after a certain amount of drying and regeneration cycles.

Venting the desiccant cartridge via the dryer exhaust, for instance when venting a humidified regeneration air flow in the regeneration mode, may be associated with simultaneous venting of the dryer inlet line. Depending on a selected type of compressor connected to the dryer inlet line via the compressor discharge line, the pressure decrease in the dryer inlet line may affect the operational efficiency of the connected compressor. Furthermore, it may be required to set the compressor to an off-load state in which the compressor is idle or stopped when the vehicular air dryer system is operated in the regeneration mode. Conversely, venting of the compressor discharge line, in particular in a drying mode of the vehicular air dryer system, may affect a pneumatic consumer system connected to the vehicular air dryer system.

In view of the above, it is an object of the present invention to provide a vehicular air dryer system being operable in a more versatile, flexible and efficient manner. In particular, it is an object to provide a vehicular air dryer system with improved venting functionality. It is a further object of the present invention to provide an improved air dryer for a vehicular air dryer system, an improved pneumatic vehicle system and an improved vehicle comprising a pneumatic vehicle system.

Aspects and embodiments of the invention provide a vehicular air dryer system, an air dryer for a vehicular air dryer system, a pneumatic vehicle system and a vehicle comprising a pneumatic vehicle system as indicated in the appended claims.

According to a first aspect of the present invention, there is provided a vehicular air dryer system, comprising:
- a dryer inlet configured to receive air from a compressor discharge line,
- a dryer outlet configured to supply dried air,
- a desiccant cartridge configured to receive the air from the dryer inlet via a dryer inlet line and to provide the dried air for outputting to the dryer outlet via a dryer outlet line,
- a dryer exhaust,
- a pneumatically controlled valve assembly being configured to selectively exhaust air from the compressor discharge line and/or from the desiccant cartridge via the dryer exhaust, and
- a control valve assembly configured to provide control pressure signals to at least one of the pneumatically controlled valve assembly and a compressor connected to the compressor discharge line.

Various technical effects are attained by the vehicular air dryer system. The provision of a pneumatically controlled valve assembly being configured to selectively exhaust air from either or both the compressor discharge line and the desiccant cartridge via the dryer exhaust may allow to selectively vent exhaust air from the compressor discharge line without affecting a pneumatic consumer system connected to the dryer outlet, to vent exhaust air from the desiccant cartridge without affecting the compressor discharge line and a connected compressor, or to vent exhaust air from both the compressor discharge line and the desiccant cartridge. By providing independent venting functions, the compressor is no longer required to be stopped or set to an idle mode when the desiccant cartridge is vented. Consequently, improved drying and regeneration modes as well as increased efficiency and protection for a connected compressor and for a connected pneumatic consumer system may be accomplished using the suggested vehicular air dryer system.

Vehicular air dryer systems, vehicular air dryers, vehicular air dryer assemblies, pneumatic vehicle systems and vehicles will be described. As used herein, the term "vehicular air dryer system" refers to a vehicular system comprising components integrated into a vehicular air dryer, it not being required that all components of the vehicular air dryer system be structural elements of the vehicular air dryer. For illustration, a vehicular air dryer system according to some embodiments may comprise a control valve assembly that is separate from and fluidically connected to a vehicular air dryer. The term "vehicular air dryer assembly" refers to an assembly that comprises a vehicular air dryer comprising the vehicular air dryer system according to an embodiment, or to an assembly that comprises a control valve assembly and a vehicular air dryer comprising at least a pneumatically controlled valve assembly controllable by the control valve assembly. The vehicular air dryer assembly may include additional components, such as one or several of a compressor, a compressor discharge line, and/or a supply line. A pneumatic vehicle system may comprise the vehicular air dryer system, a compressor, and at least one pneumatic consumer system. The at least one pneumatic consumer system may comprise a pneumatic brake system and/or a pneumatic levelling system, without being limited thereto. As used herein, the term "pneumatic vehicle system" encompasses an electropneumatic vehicle system, such as an electropneumatic brake and/or levelling system.

In accordance with the present disclosure, a vehicular air drying system may generally be a structural unit implemented in a vehicle or suitable for implementation in a vehicle for receiving and drying compressed air in order to provide dried compressed air to a pneumatic consumer system. The vehicle may be a motor vehicle of any type designed to transport people and/or cargo. In particular, the vehicle may be a commercial vehicle, i.e. a vehicle commercially used for carrying goods or fare-paying passengers. For instance, the commercial vehicle may be a truck or a bus. At least some of the described components of the vehicular air drying system may be arranged within a housing of the vehicular air drying system. The vehicular air drying system may comprise further air processing peripherals such as a protection valve assembly or air filters. The vehicular air drying system comprises a desiccant cartridge having a desiccant. Depending on a selected desiccant material and its degradation properties, the desiccant cartridge may be provided as an exchangeable cartridge. The desiccant may be configured to remove moisture from an airflow flowing through the desiccant by means of an adsorption process. Upon reaching a certain saturation point, it may be necessary to regenerate the desiccant by a suitable desorption process. Generally, regeneration of the desiccant may be performed by leading a dry regeneration airflow through the desiccant. The dry regeneration airflow removes moisture from the desiccant and the humidified regeneration airflow may be vented via the dryer exhaust. Hence, the vehicular air dryer system is operable in a drying mode for drying the received compressed air and in a regeneration mode for regenerating the desiccant cartridges with received regeneration air. The regeneration air may, for instance, be a diverted airflow of dried compressed air from the dryer outlet or from a supply line connected to the dryer outlet.

As indicated above, the vehicular air dryer system comprises a pneumatically controlled valve assembly. The pneumatically controlled valve assembly may comprise at least one valve, preferably at least two valves, configured to selectively exhaust air from the compressor discharge line and/or from the desiccant cartridge by selectively opening or blocking a fluid connection between the dryer inlet line and the dryer exhaust and by selectively opening or blocking a fluid connection between the desiccant cartridge and the dryer exhaust.

As indicated above, the vehicular air dryer system may further comprise a control valve assembly. The control valve assembly may comprise at least one valve, preferably at least two valves, configured to provide control pressure signals to at least one of the pneumatically controlled valve assembly and a compressor connected to the compressor discharge line. The control valve assembly may comprise at least one of a solenoid control valve and a pneumatic control valve. Preferably, the control valve assembly comprises a plurality of solenoid control valves, thus forming a solenoid valve assembly as a control valve assembly configured to selectively control the pneumatically controlled valve assembly.

According to an embodiment of the first aspect of the invention, the pneumatically controlled valve assembly may comprise
- a purge valve comprising a first purge valve port connected to the dryer inlet line and a second purge valve port connected to the dryer exhaust, and
- a switching valve comprising a first switching valve port connected to the dryer inlet line, a second switching valve port connected to the desiccant cartridge, and a third switching valve port connected to the dryer exhaust.

By providing a purge valve with first and second purge valve ports as well as a switching valve comprising first, second and third switching valve ports, implementation of a selective exhaust function may be realized using a simple structure with a low valve number and a low system complexity.

The purge valve and the switching valve may be pneumatically controllable. The control valve assembly may comprise a first control valve configured to provide a first control pressure signal to control the purge valve. The control valve assembly may comprise a second control valve configured to provide a second control pressure signal to control the compressor. At least one of the first control valve and the second control valve may be a solenoid control valve. The provision of the first control valve configured to provide the first control pressure signal to control the purge valve and of the second control valve, separate from the first control valve and configured to provide the second control pressure signal to control the compressor allow the vehicular air dryer system to provide additional functions, such as enabling a regeneration of the desiccant cartridge without requiring the compressor to be set to an off-load state, such as idle or stopped. The provision of the pneumatically controllable valve assembly in association with the control valve assembly also allows venting the compressor discharge line without affecting a pneumatic consumer system that may be directly or indirectly coupled to the dryer outlet.

The control valve assembly may comprise a third control valve, preferably a solenoid control valve, configured to provide a regeneration control pressure signal to effect desiccant regeneration of the desiccant cartridge. Thereby, versatility of the vehicular air dryer system is further enhanced. The provision of a third control valve, separate from the first control valve operative to control the purge valve and separate from the second control valve operative to control the compressor, enables the vehicular air dryer system to provide functionalities such as enabling a decrease in pressure in the supply line even when the compressor is pumping, enabling a regeneration of the desiccant cartridge while reducing or eliminating an action on the compressor discharge line, and/or enabling venting of the compressor discharge line without affecting pneumatic consumer system pressure.

The third control valve may be configured to provide both the regeneration control pressure signal and a third control pressure signal to control the switching valve. Thereby, the functions of
- on-load operation, in which the compressor provides compressed air that is dried by the desiccant cartridge, with the dry air being provided to at least one pneumatic consumer,
- off-load operation, in which the compressor is set to an idle state or stopped,
- decreasing the pressure in the supply line via the vehicular air dryer system without requiring the compressor to be in an off-load state,
- regeneration of the desiccant cartridge, e.g., by an air flow from the dryer outlet to the dryer exhaust through the vehicular air dryer system, without affecting the compressor discharge line connected to the dryer inlet, and
- venting of the compressor discharge line, e.g., via the dryer exhaust, without affecting pneumatic consumer system pressure,
can be implemented using a vehicular air dryer system having three control valves, in particular for a vehicular air dryer system having a one-chamber configuration, or using a vehicular air dryer system having four or five control valves, in particular for a vehicular air dryer system having a twin chamber configuration.

The control valve assembly may be configured to provide the first control pressure signal, the second control pressure signal, and the regeneration control pressure signal independently of each other. Thereby, the various states of the vehicular air dryer system are attainable using the control valve assembly to provide the various control pressure signals.

The control valve assembly may be configured such that the first control valve, the second control valve, and the third control valve are independently controllable. Thereby, the functions of on-load operation, off-load operation, decreasing the pressure in the supply line via the vehicular air dryer system without requiring the compressor to be in an off-load state, regeneration of the desiccant cartridge without affecting the compressor discharge line, and venting of the compressor discharge line without affecting the pneumatic consumer system pressure can be implemented by controlling the first control valve, the second control valve, and the third control valve.

Generally, the first control valve, the second control valve and the third control valve may be configured as pneumatic control valves. Preferably, the first control valve, the second control valve and the third control valve may be configured as electrically controllable solenoid control valves. The vehicular air dryer system or an air dryer assembly that comprises the vehicular air dryer system may comprise an electronic control unit (ECU) configured to provide electric control signals to the control valves of the control valve assembly to control the control valve assembly. The ECU may be configured to generate the electric control signals to control the control valves of the control valve assembly so as to implement functions that include, at least, a regeneration without requiring the compressor to be in off-load state and a discharge line venting which does not affect pressure in the supply line connected to the dryer outlet. The ECU may be configured to generate the electric control signals for different control valves of the control valve assembly independently of each other, but in a manner that is coordinated so as to implement the desired function. Thereby, the ECU can control the functions of on-load operation, off-load operation, decreasing the pressure in the supply line via the vehicular air dryer system without requiring the compressor to be in an off-load state, regeneration of the desiccant cartridge without affecting the compressor discharge line, and venting of the compressor discharge line without affecting the pneumatic consumer system pressure.

The purge valve may have a first purge valve position and a second purge valve position. The purge valve may be configured such that it reduces or blocks air passage between the dryer inlet line and the dryer exhaust when the purge valve is in the first purge valve position. Thereby, the purge valve is operative to block fluid communication between the dryer inlet line and the dryer exhaust via the purge valve, enabling functions such as supplying dried air via the dryer outlet, with fluid communication being established between the dryer inlet line and the desiccant cartridge via the switching valve, while blocking fluid communication between the dryer inlet and the dryer exhaust via the purge valve, and regeneration, with fluid communication being established between the desiccant cartridge and the exhaust port via the switching valve, without affecting the compressor discharge line connected to the dryer inlet.

The purge valve may be configured to provide fluid communication between the dryer inlet and the dryer exhaust when the purge valve is in the second purge valve position. Thereby, the purge valve can be operated to selectively enable communication between the dryer inlet line and the dryer exhaust, for example for venting the compressor discharge line connected to the dryer inlet, with the venting being performed through the vehicular air dryer system. The provision of the second control valve in addition to the first control valve allows the purge valve and the compressor to be controlled in such a manner that the compressor is in a pumping state and the purge valve establishes fluid communication between the compressor discharge line and the dryer exhaust. Pressure in the pneumatic consumer system can be decreased even when the compressor is pumping.

The purge valve may be configured such that it is normally in the first purge valve state and that it selectively transitions into the second purge valve state responsive to the first control pressure signal, e.g., when the first control pressure signal is equal to a pressure at the dryer outlet. Thereby, the purge valve can remain in its rest configuration for the on-load state, while being selectively activated for decreasing pressure in the pneumatic consumer system and/or for compressor discharge line venting. The purge valve may be or may comprise a 2/2 way valve. Thereby, the mentioned operations are attainable in an efficient manner.

The switching valve may have a first switching valve position and a second switching valve position. The switching valve may be configured to provide fluid communication between the dryer inlet and the desiccant cartridge when the switching valve is in the first switching valve position. The switching valve may be configured to block fluid communication between the desiccant cartridge and the dryer exhaust when the switching valve is in the first switching valve position. Thereby, the switching valve is operative to establish fluid communication between the dryer inlet and the desiccant cartridge via the switching valve, enabling functions such as supplying dried air via the dryer outlet, with fluid communication between the dryer inlet and the dryer exhaust being blocked via the purge valve.

The switching valve may be configured to provide fluid communication between the desiccant cartridge and the dryer exhaust when the switching valve is in the second switching valve position. The switching valve may be configured to block fluid communication between the dryer inlet and the desiccant cartridge when the switching valve is in the second switching valve position. Thereby, the switching valve is operative to selectively establish fluid communication between the desiccant cartridge and the dryer exhaust via the switching valve while blocking fluid communication between the dryer inlet and the desiccant cartridge, enabling functions such as decreasing pressure in the pneumatic consumer system, e.g., by decreasing pressure in the supply line coupled to the dryer outlet, the decrease being performed via the vehicular air dryer system, or regeneration.

The switching valve may be configured such that it is normally in the first switching valve state and that it selectively transitions into the second switching valve state responsive to the third control pressure signal, e.g., when the third control pressure signal is equal to a pressure at the dryer outlet. Thereby, the switching valve can remain in its rest configuration for the on-load state, while being selectively activated for decreasing pneumatic consumer system pressure without affecting the compressor discharge line and/or for regeneration. The switching valve may be or may comprise a 3/2 way valve. Thereby, the mentioned operations of the switching valve are attainable in an efficient manner.

The vehicular air dryer system may comprise a dryer outlet line, which can also be referred to as supply port line, wherein the dryer outlet line comprises an outlet check valve and is connected to the desiccant cartridge and the dryer outlet. The regeneration line may comprise a regeneration check valve and may be in fluid communication with the dryer outlet line at a location between the desiccant cartridge and the outlet check valve. The vehicular air dryer system may be operative such that provision of the regeneration signal to the regeneration line enables air flow from the pneumatic consumer system to the desiccant cartridge for performing regeneration. Thereby, regeneration can be implemented in an efficient manner.

The control valve assembly may be configured such that each of the first, second, and third control valves is operative to output a control pressure signal that can toggle between two different signal pressure values, which are also referred to as first and second pneumatic signal values herein. These two states can also be represented as a logical "0", e.g., no positive pressure at control valve output, and a logical "1", control valve outputting pressure equal to pressure at the dryer outlet. Thereby, the control valve assembly can be implemented in an efficient manner, with each of the control valves having an input in fluid communication with the supply line or otherwise in fluid communication with the dryer outlet.

The control valve assembly may be configured such that each of the first, second, and third control valves outputs the first pneumatic signal value, e.g., no positive pressure at control valve output, for an on-load state in which the compressor pumps and the vehicular air dryer provides dried air at the dryer outlet. Thereby, the control valve assembly may be operative to provide the control pressure signals that set the vehicular air dryer assembly to the on-load state.

Alternatively or additionally, the control valve assembly may be configured such that each of the first and third control valves outputs the first pneumatic signal value, e.g., no positive pressure at control valve output, and the second control valve outputs the second pneumatic signal value, e.g., the pressure at the dryer outlet, for an off-load state in which the compressor is set to off-load operation, e.g., idle or stopped. Thereby, the control valve assembly may be operative to provide the control pressure signals that set the vehicular air dryer assembly to the off-load state.

Alternatively or additionally, the control valve assembly may be configured such that each of the first and third control valves outputs the second pneumatic signal value, e.g., the pressure at the dryer outlet, and the second control valve outputs the first pneumatic signal value, e.g., no positive pressure at control valve output, for decreasing pressure in the pneumatic consumer system while the compressor continues to pump. Thereby, the control valve assembly may be operative such that the purge valve is set to the second purge valve state, establishing fluid communication between the dryer inlet and the dryer exhaust, that the switching valve is set to the second switching valve state, which blocks fluid communication between the dryer inlet and the desiccant cartridge and establishes fluid communication between the desiccant cartridge and the exhaust port, and that air flow from the dryer outlet to the desiccant cartridge is enabled, by means of the regeneration control pressure signal.

Alternatively or additionally, the control valve assembly may be configured such that each of the second and third control valves outputs the second pneumatic signal value, e.g., the pressure at the dryer outlet, and the first control valve outputs the first pneumatic signal value, e.g., no positive pressure at control valve output, for regeneration. Thereby, the control valve assembly may be operative such that the compressor is set to an off-load operation, e.g., idle or stopped, the purge valve is in the first purge valve state, blocking fluid communication between the dryer inlet and the dryer exhaust, the switching valve is set to the second switching valve state , which blocks fluid communication between the dryer inlet and the desiccant cartridge and establishes fluid communication between the desiccant cartridge and the exhaust port, and that air flow from the dryer outlet to the desiccant cartridge is enabled, by means of the regeneration control pressure signal. Thereby, regeneration is implemented in a manner which does not have an effect on the compressor discharge line connected to the dryer inlet.

Alternatively or additionally, the control valve assembly may be configured such that each of the first and second control valves outputs the second pneumatic signal value, e.g., the pressure at the dryer outlet, and the third control valve outputs the first pneumatic signal value, e.g., no positive pressure at control valve output, for performing venting of the compressor discharge line. Thereby, the control valve assembly may be operative such that the compressor is set to an off-load operation, e.g., idle or stopped, the purge valve is set to the second purge valve state, establishing fluid communication between the dryer inlet and the dryer exhaust, and that the switching valve is in the first switching valve state, which blocks fluid communication between the desiccant cartridge and the exhaust port through the switching valve. Thereby, the compressor discharge line is vented without affecting pneumatic consumer system pressure.

The ECU may be configured to generate a first electric control signal to control the first control valve, a second electric control signal to control the second control valve, and a third electric control signal to control the third control valve so as to provide the various functions herein.

The vehicular air dryer system may comprise a further desiccant cartridge. Thereby, the vehicular air dryer system may have a twin chamber configuration. This provides the effect of further enhancing lifetime before cartridge replacement is required.

The vehicular air dryer system may comprise a further pneumatically controlled valve assembly comprising a further purge valve and a further switching valve. The further purge valve may be pneumatically controllable. The further switching valve may be pneumatically controllable. Thereby, pneumatic control is implemented for both chambers of the twin chamber air dryer system. This allows the various functions to be implemented using, e.g., four or five control valves.

The first control valve may be configured to provide the first control pressure signal to control both the purge valve and the further purge valve. Thereby, the first control valve can be used to pneumatically control both the purge valve and the further purge valve.

The vehicular air dryer system may comprise a further inlet port configured to be coupled to the compressor discharge line and a further exhaust port. The further purge valve may be configured to selectively establish fluid communication between the further inlet port and the further exhaust port. The further switching valve may be configured to establish fluid communication between the further desiccant cartridge and one of the further inlet port and the further exhaust port. Thereby, the further purge valve and the further switching valve are configured to operate as explained in association with the purge valve and the switching valve.

The control valve assembly may comprise at least one fourth control valve configured to generate at least one fourth control pressure signal to control at least one of the switching valve and the further switching valve. Thereby, a selection can be made as to which of the desiccant cartridge and the further desiccant cartridge is to dry the air received from the compressor discharge line and which of the desiccant cartridge and the further desiccant cartridge is to be regenerated.

The control valve assembly may be configured such that the at least one fourth control pressure signal selects one of the desiccant cartridge and the further desiccant cartridge to perform desiccant regeneration or air drying. Thereby, a selection can be made as to which of the desiccant cartridge and the further desiccant cartridge is to dry the air received from the compressor discharge line and which of the desiccant cartridge and the further desiccant cartridge is to be regenerated.

According to an embodiment of the first aspect of the invention, the pneumatically controlled valve assembly may be arranged in a valve housing mechanically connected to a cartridge holder receiving the desiccant cartridge, wherein the purge valve and the switching valve may be arranged in parallel in the valve housing. In this way, a compact arrangement with a robust design may be provided, allowing for short fluid paths and optionally shared components as a common exhaust volume or a common silencer as further described below. Being arranged in parallel, the purge valve and the switching valve may comprise longitudinal valve axes extending in parallel. The purge valve and the switching valve may be located directly next to each other, i.e. not separated by further functional components besides of the valve housing. The purge valve and the switching valve may comprise comparable valve components having similar or identical dimensions. Preferably, the purge valve and the switching valve are independently controllable and may comprise individual control ports. The purge valve and the switching valve may comprise essentially the same mechanical structure and components. For instance, the purge valve and the switching valve may each comprise a movable piston having an upper piston element interconnected to a lower piston element by a screw adapter, by an insert, by a retaining ring or by bonding, hence providing a robust valve design. In case of using a screw adapter, a screw connection between the upper piston element and the lower piston element may be secured by a screw lock. Furthermore, the purge valve and the switching valve may each comprise a return spring arranged between the upper piston element and the valve housing for enabling an automatic reset of the valves. The purge valve and the switching valve may furthermore comprise o-rings or bonded sealings for reliable operation. The purge valve and the switching valve may comprise similar or identical sealing components and positions.

According to an embodiment of the first aspect of the invention, the purge valve and the switching valve may extend vertically to the cartridge holder. The vertical orientation facilitates gravity-assisted removal of contaminants and residues, such as water or oil drops. Furthermore, the vertical orientation may assist in keeping the purge valve and the switching valve in open valve positions. By extending vertically to the cartridge holder, the purge valve and the switching valve may extend vertically to the ground under mounting conditions, i.e. when the vehicular air dryer system is arranged in a regular mounting orientation in a vehicle. For instance, regular mounting orientations of vehicular air dryer systems may comprise a horizontal orientation of the cartridge holder.

According to an embodiment of the first aspect of the invention, the purge valve and the switching valve may comprise a common bottom element having a first purge valve seat for the purge valve and a first switching valve seat for the switching valve. In this way, a compact arrangement with a reduced number of parts may be provided and an inexpensive design with a decreased mechanical complexity may be achieved. For instance, the common bottom element may be arranged under the valves and the first purge valve seat and the first switching valve seat may be arranged next to each other in the common bottom element. According to a refined embodiment, the first purge valve seat and the first switching valve seat may comprise similar or identical geometrical shapes and dimensions. The common bottom element may form a part of the valve housing described above. Generally, the valve housing and/or the common bottom element may be configured to receive more than two valves, thus allowing to implement valve configurations of higher complexity.

According to a refined embodiment, the valve housing may comprise a second switching valve seat for the switching valve. As the purge valve may be configured as a 2/2 way valve and as the switching valve may be configured as a 3/2 way valve, implementing a further switching valve seat in the valve housing may allow for a simple and compact implementation of the different valve configurations.

According to a refined embodiment, the valve housing may further comprise a second purge valve seat for the purge valve, wherein the purge valve or the valve housing comprises a blocking element for limiting a purge valve stroke of the purge valve to a lower valve stroke compared to a switching valve stroke of the switching valve. Hence, the valve housing may comprise identical outlines for the purge valve and the switching valve for easier manufacture, while different valve configurations may be implemented by different valve strokes.

According to an embodiment of the first aspect of the invention, the purge valve and the switching valve may share a common exhaust volume arranged in a bottom area of the valve housing. In this way, a compact arrangement with a shared exhaust volume may be provided. Positioning the common exhaust volume in the bottom area of the valve housing may assist in efficiently removing water or oil contaminants from the pneumatically controlled valve assembly while preventing water traps. Optionally, the removal of water or oil contaminants may be supported by sloped or curved contours of the valve housing. The bottom area of the valve housing may be arranged in an opposing position relative to the cartridge holder. In other words, the purge valve and the switching valve may extend between the cartridge holder and the bottom area. The bottom area may adjoin the common bottom element. For instance, the common exhaust volume may extend under the common bottom element of the purge valve and the switching valve, i.e., on an underside of the common bottom element facing away from the purge valve and the switching valve. Preferably, the common exhaust volume may be located at the lowest point of the valve housing with reference to the ground.

According to a refined embodiment, a silencer may be arranged in the common exhaust volume. In this way, improved noise reduction upon venting processes may be accomplished. Venting processes may cause remarkable noise emission due to high pressure gradients and flow velocities. Preferably, a single common silencer may be provided for both the purge valve and the switching valve, thus facilitating the pneumatically controlled valve assembly structure. Furthermore, due to the extended common exhaust volume, a larger silencer may be used compared to separate silencers provided for each valve. Nevertheless, the common exhaust volume may be configured to have different sizes of silencers installed in the common exhaust volume, thus providing increased flexibility and scalability. The silencer may be attached in the common exhaust volume by, for instance, being screwed to the common bottom element, thus enabling easy assembly and installation. Since selective venting options are provided by using a pneumatically controlled valve assembly being configured to selectively exhaust air from the compressor discharge line or from the desiccant cartridge via the dryer exhaust, the vented air volume at a time may be lower compared to non-selective exhaust solutions, thus contributing to even further reduced noise emission.

According to an embodiment of the first aspect of the invention, the vehicular air dryer system may comprise a recharging arrangement for selectively recharging the dryer inlet line with compressed air from the dryer outlet line or from a supply line connected to the dryer outlet. Upon an exhaust-related pressure drop in the dryer inlet line, it might be beneficial, in particular for certain types of compressors, to enable a recharging function in order to provide a defined positive minimum pressure in the dryer inlet line. For instance, some configurations in practice may comprise a cut-off valve for temporarily closing the compressor discharge line, e.g. during a regeneration process. If the compressor discharge line is reconnected to the dryer inlet, the dryer inlet line may be at a low pressure level due to a previous venting process. If the compressor is in an off-load state, the low pressure level in the dryer inlet line may affect the operation efficiency of the connected compressor. Hence, a recharging arrangement for selectively recharging the dryer inlet line before the compressor is restarted may be beneficial for maintaining a reliable and efficient operability of the compressor. For instance, the recharging may be conducted following to a regeneration process. In particular, the recharging may be conducted while the compressor is in an off-load state. The compressed air may beneficially be taken from the dryer outlet line for providing a compact and efficient arrangement using system components of the vehicular air dryer system. For instance, the compressed air may be taken from a position downstream of a system check valve arranged in the dryer outlet line for general prevention of backflows from the dryer outlet or from a connected pneumatic consumer system. Generally, the recharging arrangement may be implemented with vehicular air dryer systems working with pneumatic or electronic regeneration signals.

According to a refined embodiment, the recharging arrangement may comprise a refill valve arranged in a bypass line connecting the dryer inlet line with the dryer outlet line, thus allowing for efficiently controlled recharging. The refill valve may, for instance, be a 2/2 way valve. Furthermore, a check valve may be arranged in the bypass line in order to prevent bypassing of the desiccant cartridge in the drying mode. Generally, the refill valve may be optionally implemented upon client request without complex system changes. For instance, the bypass line may be closed with a plug if the refill valve is omitted or removed.

According to a refined embodiment, the refill valve may be pneumatically controllable in coordination with the purge valve. In this way, a finely coordinated valve actuation may be achieved. For instance, the refill valve may be actuated only in a purge state of the purge valve, and it may further prevent backflow via the bypass line in a drying mode of the vehicular air dryer system. In order to control the refill valve in coordination with the purge valve, a pressure signal for the purge valve may be split and provided to control ports of the purge valve and the refill valve. The refill valve may allow a recharging airflow to pass the refill valve in a deactivated state and it may block a recharging airflow to pass the refill valve in an activated state. By providing a coordinated pressure signal to the purge valve and to the refill valve, the refill valve may be activated in order to block the recharging airflow when the compressor discharge line is vented via the dryer exhaust. This may furthermore allow to vent the compressor discharge line without affecting the system pressure via the bypass line.

According to a refined embodiment, the refill valve may comprise a flow restrictor. In this way, a fail-safe operation of the vehicular air dryer system may be promoted. The flow restrictor may be an orifice element to limit the flow rate of an airflow through the refill valve. The flow restrictor may comprise an orifice of a predefined maximum size which enables the vehicular air dryer system to compensate an external leakage of the refill valve by running the compressor. At the same time, the orifice may have a predefined minimum size in order to allow for efficient recharging of the dryer inlet line.

Generally, it may be advantageous if the vehicular air dryer system is configured to maintain a regeneration control signal after completion of a regeneration process until recharging of the dryer inlet line is completed. For this, it may advantageous to use an electric regeneration control signal rather than a pneumatic regeneration control signal. For instance, a regeneration line of the vehicular air dryer system may be connected to a separate further control input port for selectively providing a regeneration airflow from an external source, e.g. from a supply line connected to the dryer outlet, based on an electronic regeneration and recharging signal. The electronic regeneration and recharging signal may maintain a regeneration and recharging airflow through the regeneration line or a longer time period compared to a regeneration signal optimized for desiccant cartridge regeneration in order to allow for a recharging of the dryer inlet line with a regeneration airflow after deactivation of the switching valve which has been activated in coordination with the regeneration process. For instance, a solenoid control valve may be used to coordinate the combined regeneration and recharging process. The solenoid control valve for controlling the combined regeneration and recharging process may be controlled by the ECU described above.

According to an embodiment of the first aspect of the invention, the vehicular air dryer system may further comprise a regeneration line bypassing an outlet check valve in the dryer outlet line, wherein the vehicular air dryer system is configured to recharge the dryer inlet line with compressed air from the dryer outlet line via the regeneration line. In this way, a simple and compact implementation may be provided to conduct recharging via the regeneration line. Hence, recharging of the dryer inlet line may be performed without the need of a further refill valve to be controlled. The regeneration line may comprise a regeneration check valve and a restrictor for depressurization of the regeneration airflow. The regeneration line may be connected to the dryer outlet line at a location between the desiccant cartridge and the outlet check valve. The regeneration process may be initiated by activating the switching valve in order to vent the desiccant cartridge volume. Upon completion of the regeneration process, the switching valve may be deactivated and the dryer inlet line may be recharged by the regeneration airflow from the dryer outlet line until the compressor is restarted.

The vehicular air dryer system may be implemented in a vehicular air dryer. The vehicular air dryer may comprise an air dryer housing and the vehicular air dryer system of any aspect or embodiment disclosed herein. The pneumatically controlled valve assembly may be arranged in the air dryer housing. The control valve assembly may be arranged in the air dryer housing. Thereby, ease of installation is attained, as both the control valve assembly and the pneumatically controlled valve assembly may be arranged in the air dryer housing. Alternatively, the control valve assembly may be provided external to and separately from the vehicular air dryer. The combination of vehicular air dryer and control valve assembly is also referred to as a vehicular air dryer assembly herein. The vehicular air dryer assembly may comprise an air dryer housing and the vehicular air dryer system of any aspect or embodiment disclosed herein. The pneumatically controlled valve assembly may be arranged in the air dryer housing. The control valve assembly may be arranged outside the air dryer housing and may be connected to the pneumatically controlled valve assembly by pneumatic connections. Thereby, greater flexibility in positioning the control valve assembly is attained. Providing the control valve assembly separately from the vehicular air dryer may also be beneficial for use with a twin chamber air dryer.

The air dryer housing may have a first control pressure port configured to receive the first control pressure signal, a second control pressure port configured to receive the second control pressure signal, a third control pressure port configured to receive the third control pressure signal, and a regeneration control signal port configured to receive the regeneration control pressure signal. Thereby, the ports configured to receive the various pressure control signals are provided on the air dryer housing.

According to a second aspect of the present invention, there is provided an air dryer for a vehicular air dryer system of any aspect or embodiment disclosed herein, the air dryer comprising:
- a dryer inlet configured to receive air from a compressor discharge line,
- a dryer outlet configured to supply dried air,
- a desiccant cartridge configured to receive the air from the dryer inlet via a dryer inlet line and to provide the dried air for outputting to the dryer outlet via a dryer outlet line,
- a dryer exhaust, and
- a pneumatically controlled valve assembly being configured to selectively exhaust air from the compressor discharge line and/or from the desiccant cartridge via the dryer exhaust.

In this way, a compact air dryer with enhanced venting functionality may be provided. In order to provide a vehicular air dryer system according to any aspect or embodiment disclosed herein, the air dryer may be combined with an external control valve assembly configured to provide pressure control signals to the pneumatically controlled valve assembly of the air dryer.

According to a third aspect of the present invention, there is provided a pneumatic vehicle system, comprising:
- a compressor connected to the dryer inlet via a compressor discharge line,
- the vehicular air dryer system according to any preceding claim,
- a pneumatic consumer system connected to the dryer outlet via a supply line, and
- a control unit configured to control the control valve assembly.

By means of the suggested pneumatic vehicle system, a pneumatic vehicle system with an enhanced vehicular air dryer system is provided, which may, for instance, lead to higher operation efficiency and a longer lifetime of components of the pneumatic vehicle system. Furthermore, the dried air supplied by the vehicular air dryer system may be provided with high quality to the pneumatic consumer system due to optimized and finely tuned drying and regeneration processes.

The control unit may be an electronic control unit (ECU). The control valve assembly may comprise electrically controllable solenoid control valves and the ECU may be configured to selectively provide electric signals to the solenoid control valves.

The pneumatic consumer system may be configured as a pneumatic braking system, a pneumatic air suspension system and/or a tire-inflation system. Since these pneumatic systems may require a major amount of dried compressed air, it may be ensured by the enhanced pneumatic vehicle system to provide dried compressed air to these pneumatic systems in a reliable and efficient manner.

According to a fourth aspect of the present invention, there is provided a vehicle, in particular a commercial vehicle, comprising the pneumatic vehicle system according to the third aspect or any related embodiment disclosed herein. The vehicle may be a motor vehicle of any type designed to transport people and/or cargo. In particular, the vehicle may be a commercial vehicle, i.e. a vehicle commercially used for carrying goods or fare-paying passengers. For instance, the commercial vehicle may be a truck or a bus. For commercial vehicles, the advantage of an improved pneumatic vehicle system comprising a vehicular air dryer system reliably supplying dried air of high quality may significantly raise the operating efficiency of the vehicle, in particular with regard to the major consumption of compressed air compared to non-commercial vehicles. Furthermore, by enhancing the venting functionality of the vehicular air dryer system comprised by the pneumatic vehicle system, decreased noise emission may be achieved especially for large-sized commercial vehicles. Nevertheless, the invention may generally also be applicable to personal vehicles.

According to another aspect, there may be provided a method of controlling a pneumatic vehicle system. The pneumatic vehicle system may comprise a compressor and an air dryer, the compressor comprising a compressor discharge port, the air dryer being connected to the compressor discharge port by a compressor discharge line. The air dryer may comprise a dryer inlet configured to receive air from the compressor discharge line, a dryer outlet configured to supply dried air, a desiccant cartridge configured to receive the air from the dryer inlet and to provide the dried air for outputting via the dryer outlet, and a dryer exhaust. The air dryer may further comprise a pneumatically controlled valve assembly. The pneumatically controlled valve assembly may comprise a purge valve comprising a first purge valve port connected to the dryer inlet and a second purge valve port connected to the dryer exhaust, the purge valve being pneumatically controllable, and a switching valve comprising a first switching valve port connected to the dryer inlet, a second switching valve port connected to the desiccant cartridge, and a third switching valve port connected to the dryer exhaust, the switching valve being pneumatically controllable. The method may comprise providing, by a first control valve, a first control pressure signal to control the purge valve, and providing, by a second control valve, a second control pressure signal to control the compressor.

Various technical effects are attained by the control method. By using the first control valve to provide the first control pressure signal to control the purge valve and using the second control valve to provide the second control pressure signal to control the compressor, the air dryer system can provide additional functions. Examples for such functions include enabling a regeneration of the desiccant cartridge without requiring the compressor to be set to an off-load state, such as idle or stopped. By using the control valve assembly in association with the pneumatically controlled valve assembly, the control method also enables venting the compressor discharge line without affecting a pressure in a supply line connected to the dryer outlet.

The method may comprise providing, by a third control valve, a regeneration control pressure signal to effect desiccant regeneration of the desiccant cartridge. Thereby, versatility of the pneumatic vehicle system is further enhanced. The provision of a third control valve, separate from the first control valve operative to control the purge valve and separate from the second control valve operative to control the compressor, enables the pneumatic vehicle system to provide functionalities such as enabling a decrease in pressure in the supply line even when the compressor is pumping, enabling a regeneration of the desiccant cartridge while reducing or eliminating an action on the compressor discharge line, and/or enabling venting of the compressor discharge line without affecting pneumatic consumer system pressure.

The method may comprise providing, by the third control valve, both the regeneration control pressure signal and a third control pressure signal to control the switching valve. Thereby, the various functions can be implemented without significantly adding to the complexity of the control valve assembly.

The method may further comprise providing, by an electronic control unit (ECU), electric control signals to the control valves of the control valve assembly to control the control valve assembly. The control valve assembly may comprise electrically controllable solenoid control valves. The method may comprise generating, by the ECU, the electric control signals to control the solenoid control valves of the control valve assembly so as to implement functions that include, at least, a regeneration without requiring the compressor to be in off-load state and a discharge line venting which does not affect pressure in the supply line connected to the dryer outlet. Thereby, the ECU can control the various functions of the air dryer assembly.

Additional features of the control method and the effects attained thereby correspond to features disclosed in association with the vehicular air dryer system, the vehicular air dryer or vehicular air dryer assembly, the pneumatic vehicle system, or the commercial vehicle. The method may be performed by or using the vehicular air dryer system, the vehicular air dryer or vehicular air dryer assembly, the pneumatic vehicle system, or the commercial vehicle disclosed herein.

Various effects and advantages are attained by the vehicular air dryer system, the vehicular air dryer, the vehicular air dryer assembly, the pneumatic vehicle system, the commercial vehicle, and the control method disclosed herein. The vehicular air dryer system is more versatile and provides additional functions.

The above and other characteristics will become clear from the following description of illustrative, non-restrictive examples, which will be further outlined with reference to the appended drawings. The drawings are not necessarily to scale. Some features could be exaggerated or minimized to show details of particular components. Therefore, specific structural and functional details disclosed herein are not to be interpreted as limiting, but merely as a representative basis for teaching one skilled in the art.
- Fig. 1: is a pneumatic circuit representation of an air dryer system according to an embodiment.
- Fig. 2: is a pneumatic circuit representation of an air dryer system according to another embodiment.
- Fig. 3: is a schematic representation of a pneumatic vehicle system comprising the air dryer system of Fig. 2.
- Fig. 4: is a schematic representation of a pneumatic vehicle system comprising the air dryer system of Fig. 1.
- Fig. 5: is a pneumatic circuit representation of an air dryer system having a twin chamber configuration according to an embodiment.
- Fig. 6: is a pneumatic circuit representation of an air dryer system having a twin chamber configuration according to another embodiment.
- Fig. 7: is a schematic representation of a vehicle comprising a pneumatic vehicle system according to an embodiment.
- Fig. 8: is a schematic representation of a vehicle comprising a pneumatic braking system according to an embodiment.
- Fig. 9: is a schematic representation of a vehicle comprising a pneumatic braking system according to an embodiment.
- Fig. 10: is a flow chart of a method according to an embodiment.
- Fig. 11: is a flow chart of a method according to an embodiment.
- Fig. 12: is a schematic representation of a commercial vehicle comprising an air dryer system according to an embodiment.
- Fig. 13: is a schematic sectional representation of an air dryer for an air dryer system according to an embodiment.
- Fig. 14: provides an enlarged view of a pneumatically controlled valve assembly of the air dryer depicted in Fig. 13 according to an embodiment.
- Fig. 15: provides an enlarged view of a switching valve of the pneumatically controlled valve assembly depicted in Fig. 14.
- Fig. 16: is a schematic sectional representation of a pneumatically controlled valve assembly of an air dryer according to another embodiment.
- Fig. 17: provides a perspective front view of the air dryer depicted in Fig. 13.
- Fig. 18: provides a perspective front view of the air dryer depicted in Fig. 13 in combination with an exploded view of the pneumatically controlled valve assembly of the air dryer according to Fig. 14.
- Fig. 19: provides a sectional representation of a bottom area of the pneumatically controlled valve assembly depicted in Fig. 13 in a venting state comprising a purge valve being in a second purge valve state and a switching valve being in a second switching valve state.
- Fig. 20: provides a sectional representation of the switching valve of the pneumatically controlled valve assembly depicted in Fig. 13 in a first switching valve state.
- Fig. 21: provides a sectional representation of the switching valve of the pneumatically controlled valve assembly depicted in Fig. 13 in the second switching valve state.
- Fig. 22: provides a sectional representation of the purge valve of the pneumatically controlled valve assembly depicted in Fig. 13 in a first purge valve state.
- Fig. 23: is a pneumatic circuit representation of an air dryer with a recharging arrangement according to an embodiment.
- Fig. 24: provides a sectional representation of a purge valve of the air dryer according to Fig. 23.
- Fig. 25: provides a sectional representation of a refill valve of the air dryer according to Fig. 23.
- Fig. 26: is a pneumatic circuit representation of an air dryer with a recharging arrangement according to another embodiment.
- Fig. 27: is a pneumatic circuit representation of an air dryer with a recharging arrangement according to another embodiment.

Embodiments of the invention will be described with reference to the drawings. In the drawings, similar or identical reference signs designate elements with similar or identical configuration and/or function. To avoid repetition in the Figs. and the description of the various aspects and illustrative embodiments, it is be understood that many features are common to several aspects and embodiments. Omission of an aspect from a description or Fig. does not imply that the aspect is missing from embodiments that incorporate that aspect. Instead, the aspect may have been omitted for clarity. Like numbers in two or more figures represent the same or similar elements.

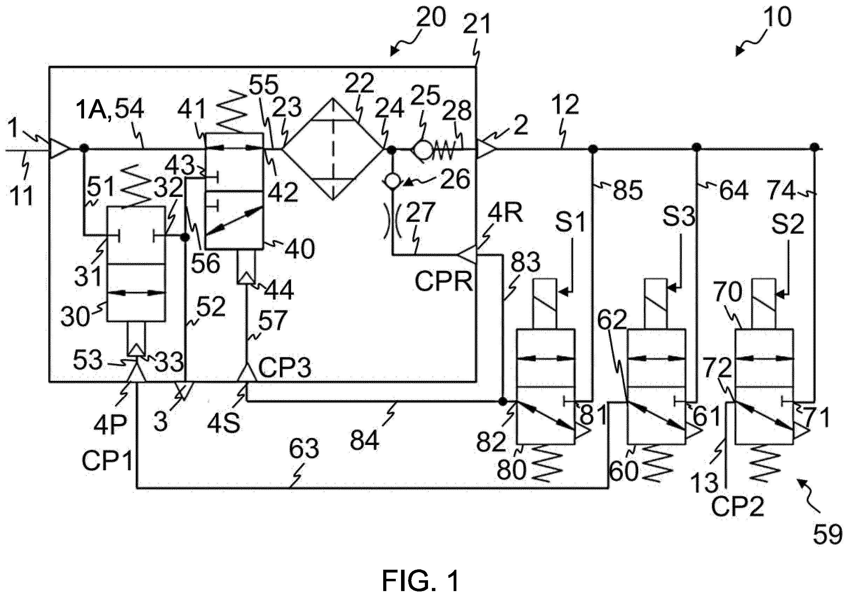

Fig. 1 shows a pneumatic circuit representation of a vehicular air dryer system 10, subsequently designated as air dryer system 10. The air dryer system 10 comprises a desiccant cartridge 22 and a pneumatically controllable valve assembly comprising a purge valve 30 and a switching valve 40 according to the represented embodiment. Furthermore, the air dryer system 10 comprises a control valve assembly which is, according to the embodiments represented in the figures, configured as a solenoid valve assembly 59 comprising solenoid valves 60, 70, 80 as control valves. Although not shown in the figures, the control valve assembly may be alternatively configured as a pneumatic valve assembly comprising pneumatic valves as control valves, or as a mixed valve assembly comprising solenoid and pneumatic valves as control valves.

The air dryer system 10 may comprise an air dryer 20 having an air dryer housing 21. At least the purge valve 30 and the switching valve 40 may be provided in the air dryer housing 21. The desiccant cartridge 22 may be configured for being reversibly engageable with and disengageable from the air dryer housing 21 in a destruction-free manner.

The air dryer system 10 has a dryer inlet 1, a dryer outlet 2, and a dryer exhaust 3. The air dryer system 10 is configured to receive air from a compressor discharge line 11 at the dryer inlet 1. The air may be pressurized air, having a pressure that exceeds ambient pressure. The air dryer system 10 is configured to provide dried air to a supply line 12, to thereby provide the dried air to a pneumatic consumer system. The air dryer system 10 is configured to exhaust air through the dryer exhaust 3, for example during one, several, or all of regeneration of the desiccant cartridge 22, venting of the compressor discharge line 11, and decreasing pressure in the pneumatic consumer system.

The desiccant cartridge 22 has a desiccant cartridge port 23 and a further desiccant cartridge port 24. The desiccant cartridge port 23 is connected to the dryer inlet 1 via a dryer inlet line 1A. The further desiccant cartridge port 24 is connected to the dryer outlet 2 via a dryer outlet line 28. The dryer outlet line 28 has an outlet check valve 25. The air dryer 20 comprises a regeneration line 27. The regeneration line 27 is connected to the dryer outlet line 28 at a position between the further desiccant cartridge port 24 and the outlet check valve 25. The regeneration line 27 comprises a regeneration check valve 26. This configuration allows regeneration of the desiccant cartridge 22 to be performed responsive to providing a regeneration control pressure signal CPR to the regeneration line 27. The air dryer 20 comprises several control input ports, including a first control input port 4P, a second control input port 4R, and third control input port 4S. The second control input port 4R is configured to receive the regeneration control pressure signal CPR.

The purge valve 30 has a first purge valve port 31 and a second purge valve port 32. The first purge valve port 31 is in fluid communication with the dryer inlet 1 via a first purge valve connection line 51. The second purge valve port 32 is in fluid communication with the dryer exhaust 3 via a second purge valve connection line 52. The purge valve 30 is pneumatically controllable. The air dryer system 20 is configured such that a purge valve control input 33 is in fluid communication, via a purge valve control signal line 53, with the first control input port 4P. By means of a first control pressure signal CP1, the purge valve 30 can be selectively set to a second purge valve state in which the purge valve 30 provides an air flow path from the first purge valve port 31 to the second purge valve port 32 and, thus, to the dryer exhaust 3. The purge valve 30 has a first purge valve state, which may be the rest state of the purge valve 30, in which the purge valve 30 blocks or significantly reduces air flow from the first purge valve port 31 to the dryer exhaust 3 through the purge valve 30. The purge valve 30 may be implemented as a 2/2 way valve.

The switching valve 40 has a first switching valve port 41, a second switching valve port 42, and a third switching valve port 43. The first switching valve port 41 is in fluid communication with the dryer inlet 1 via a first switching valve connection line 54. The second switching valve port 42 is in fluid communication with the desiccant cartridge port 23 via a second switching valve connection line 55. The third switching valve port 43 is in fluid communication with the dryer exhaust 3 via a third switching valve communication line 56. The switching valve 40 is pneumatically controllable. The air dryer system 20 is configured such that a switching valve control input 44 is in fluid communication, via a switching valve control signal line 57, with a third control input port 4P. The switching valve 40 has a first switching valve state in which the switching valve 40 provides fluid communication between the first switching valve port 41 and the second switching valve port 42 while concurrently blocking fluid communication between the second switching valve port 42 and the third switching valve port 43. The switching valve 40 has a second switching valve state in which the switching valve 40 blocks fluid communication between the first switching valve port 41 and the second switching valve port 42 while concurrently providing fluid communication between the second switching valve port 42 and the third switching valve port 43. By means of a third control pressure signal CP3, the switching valve 40 can be selectively set to a second switching valve state in which the switching valve 40 provides an air flow path from the second switching valve port 44 to the third switching valve port 43 and, thus, to the dryer exhaust 3. The switching valve 40 may be implemented as a 3/2 way valve.

The air dryer system 10 comprises the solenoid valve assembly 59. The solenoid valve assembly 59 is configured to provide the first control pressure signal CP1, a second control pressure signal CP2 for off-loading the compressor, e.g., by causing the compressor to enter idle mode or stop, the third control pressure signal CP3, and the regeneration control pressure signal CPR. The solenoid valve assembly 59 comprises a first solenoid valve 60 configured to provide the first control pressure signal CP1. The solenoid valve assembly 59 comprises a second solenoid valve 70 configured to provide the second control pressure signal CP2. The solenoid valve assembly 59 comprises a third solenoid valve 80 configured to provide the regeneration control pressure signal CPR and the third control pressure signal CP3.

The first solenoid valve 60, the second solenoid valve 70, and the third solenoid valve 80 may be independently controllable. The first solenoid valve 60, the second solenoid valve 70, and the third solenoid valve 80 may be configured to output, in their normal solenoid valve states, i.e., in the solenoid valve rest states in which the solenoid is not energized, a first control pressure value, such as ambient pressure. The first solenoid valve 60, the second solenoid valve 70, and the third solenoid valve 80 may be configured to output, in their energized states, a second control pressure value, which may be equal to the pressure in the supply line 12. In other words, the first solenoid valve 60, the second solenoid valve 70, and the third solenoid valve 80 may be configured to selectively provide the supply line pressure as control pressure signal.

The first solenoid valve 60 may comprise a first solenoid valve input port 61 and a first solenoid valve output port 62. The first solenoid valve input port 61 is in fluid communication with the supply line 12 via a first solenoid valve input line 64. The first solenoid valve output port 62 is in fluid communication with the first control input port 4P via a first control signal line 63. The first solenoid valve 60 is configured to establish fluid communication between the first solenoid valve input port 61 and the first solenoid valve output port 62 responsive to a first electric control signal S1.

The second solenoid valve 70 may comprise a second solenoid valve input port 71 and a second solenoid valve output port 72. The second solenoid valve input port 71 is in fluid communication with the supply line 12 via a second solenoid valve input line 74. The second solenoid valve output port 72 is configured to provide the second control pressure signal CP2 to the compressor via a compressor off-loading control line 13. The second solenoid valve 70 is configured to establish fluid communication between the second solenoid valve input port 71 and the second solenoid valve output port 72 responsive to a second electric control signal S2.

The third solenoid valve 80 may comprise a third solenoid valve input port 81 and a third solenoid valve output port 82. The third solenoid valve input port 81 is in fluid communication with the supply line 12 via a third solenoid valve input line 84. The third solenoid valve output port 82 is in fluid communication with the second control input port 4R via a regeneration control signal line 83. The third solenoid valve output port 82 is in fluid communication with the third control input port 4S via a third control signal line 83. The third solenoid valve 80 is configured to establish fluid communication between the third solenoid valve input port 81 and the third solenoid valve output port 82 responsive to a third electric control signal S3. The first solenoid valve 60, the second solenoid valve 70, and the third solenoid valve 80 may respectively be implemented as 3/2 way valves, with the third solenoid valve port being respectively in communication with ambient atmosphere, or as 2/2 way valves.

The solenoid valve assembly 59 may be configured such that each of the first, second, and third solenoid valves 60, 70, 80 outputs a first pneumatic signal value, e.g., no positive pressure at the solenoid valve output ports 62, 72, 82, for an on-load state in which the compressor pumps and the air dryer 20 provides dried air at the dryer outlet 2. Thereby, the solenoid valve assembly 59 is operative to provide the control pressure signals that set the air dryer assembly 10 to the on-load state.

The solenoid valve assembly 59 may be configured such that both the first solenoid valve 60 and the third solenoid valve 80 outputs the first pneumatic signal value, e.g., no positive pressure at the solenoid valve output ports 62, 82, and the second solenoid valve 70 outputs the second pneumatic signal value, e.g., the pressure at the dryer outlet 2, to off-load the compressor, e.g., for setting the compressor to idle mode or stopping the compressor. Thereby, the solenoid valve assembly 59 may be operative to provide the control pressure signals that set the air dryer assembly 10 to the off-load state.

The solenoid valve assembly 59 may be configured such that both the first solenoid valve 60 and the third solenoid valve 80 outputs the second pneumatic signal value, e.g., the pressure at the dryer outlet 2, and the second solenoid valve 70 outputs the first pneumatic signal value, e.g., no positive pressure at solenoid valve output port 72, for decreasing pressure in the pneumatic consumer system while the compressor continues to pump. Thereby, the solenoid valve assembly 59 may be operative such that the purge valve 30 is set to the second purge valve state, establishing fluid communication between the dryer inlet 1 and the dryer exhaust 3, that the switching valve 40 is set to the second switching valve state, which blocks fluid communication between the dryer inlet 1 and the desiccant cartridge 22 and establishes fluid communication between the desiccant cartridge 22 and the exhaust port 3, and that air flow from the dryer outlet 2 to the desiccant cartridge 22 is enabled, by means of the regeneration control pressure signal CPR.

The solenoid valve assembly 59 may be configured such that both the second solenoid valve 70 and the third solenoid valve 80 outputs the second pneumatic signal value, e.g., the pressure at the dryer outlet 2, and the first solenoid valve 60 outputs the first pneumatic signal value, e.g., no positive pressure at solenoid valve output port 72, for regeneration. Thereby, the solenoid valve assembly 59 is operative such that the compressor is set to an off-load operation, e.g., idle or stopped, the purge valve 30 is in the first purge valve state, blocking fluid communication between the dryer inlet 1 and the dryer exhaust 3, that the switching valve 40 is set to the second switching valve state, which blocks fluid communication between the dryer inlet 1 and the desiccant cartridge 22 and establishes fluid communication between the desiccant cartridge 22 and the exhaust port 3, and that air flow from the dryer outlet 2 to the desiccant cartridge 22 is enabled, by means of the regeneration control pressure signal CPR. Thereby, regeneration is implemented in a manner which does not have an effect on the compressor discharge line 11 connected to the dryer inlet 1.

The solenoid valve assembly 59 may be configured such that both the first solenoid valve 60 and the second solenoid valve 70 output the second pneumatic signal value, e.g., the pressure at the dryer outlet 2, and the third solenoid valve outputs 80 the first pneumatic signal value, e.g., no positive pressure at the third solenoid valve output port 82, for performing venting of the compressor discharge line 11. Thereby, the solenoid valve assembly 59 may be operative such that the compressor is set to an off-load operation, e.g., idle or stopped, the purge valve 30 is set to the second purge valve state, establishing fluid communication between the dryer inlet 1 and the dryer exhaust 3, and that the switching valve 40 is in the first switching valve state, which blocks fluid communication between the desiccant cartridge 22 and the exhaust port 1 through the switching valve 40. Thereby, the compressor discharge line is vented without affecting pneumatic consumer system pressure, e.g., without affecting the pressure in the supply line 12.

Thus, the solenoid valve assembly 59 in association with the pneumatically controlled valve assembly comprising the purge valve 30 and the switching valve 40 is configured to provide more versatile air dryer system functions. Since the pneumatically controlled valve assembly is configured to selectively exhaust air from the compressor discharge line 11 and/or from the desiccant cartridge 22, the air dryer system 10 is configured to allow a regeneration to be performed without affecting the compressor discharge line 11 and/or to perform venting of the compressor discharge line 11 without affecting the pressure in the pneumatic consumer system, e.g., without affecting the pressure in the supply line 12. The air dryer system 10 also allows pressure of the pneumatic consumer system to be decreased while the compressor is pumping.

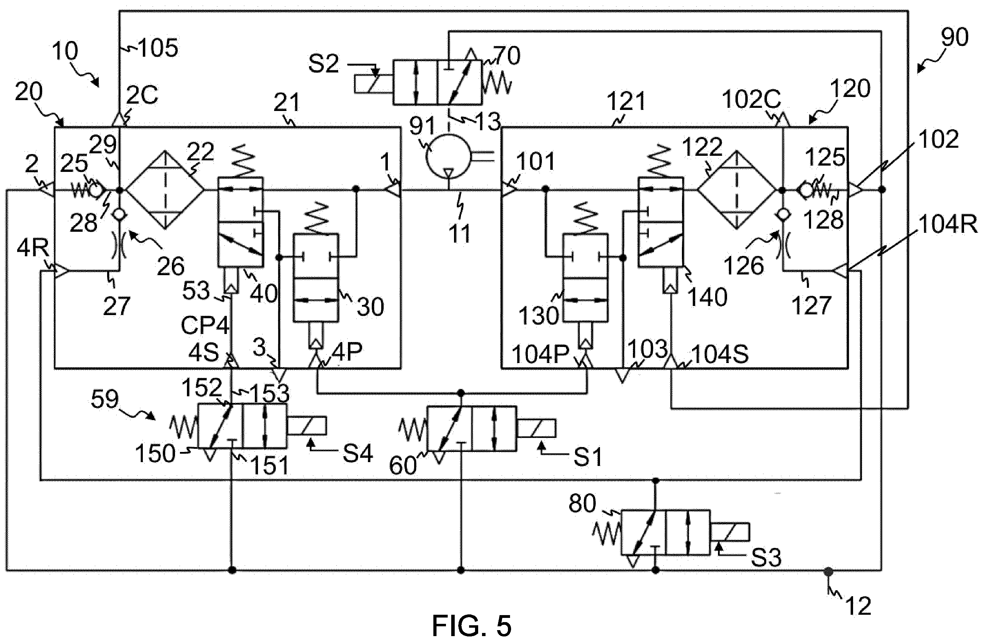

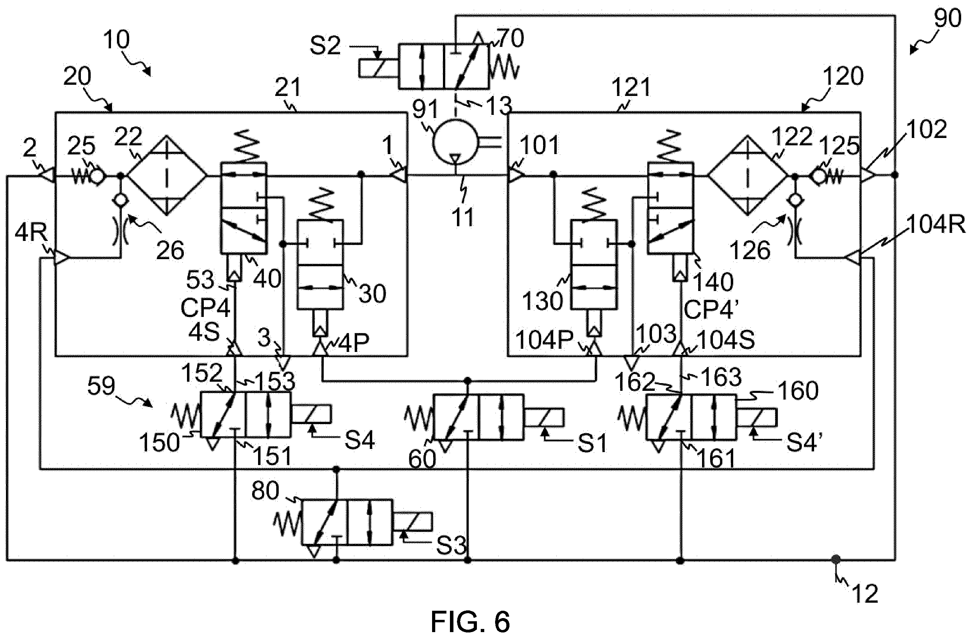

The air dryer system 10 of Fig. 1 comprises the solenoid valve assembly 59 that is separate from the air dryer 20 and in fluid communication with the control input ports 4P, 4S, 4R of the air dryer 20. Such a configuration affords greater flexibility in positioning the solenoid valve assembly 59. Such a configuration also lends itself to being used in association with twin chamber air dryers, as will be explained in more detail with reference to Fig. 5 and Fig. 6.

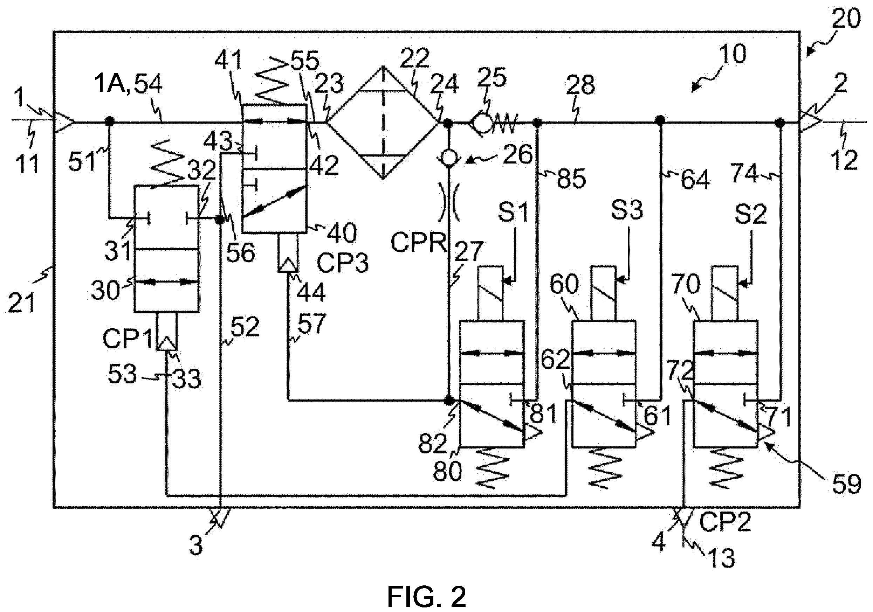

Fig. 2 shows an air dryer 20 which comprises the air dryer system 10. The solenoid valve assembly 59, the purge valve 30, and the switching valve 40 are comprised by the air dryer 20. The solenoid valve assembly 59, the purge valve 30, and the switching valve 40 may be arranged in the air dryer housing 21 of the air dryer 20. The desiccant cartridge 22 may be reversibly engageable with and disengageable from the air dryer housing 21 in a destruction-free manner.

The air dryer 20 comprises the solenoid valve assembly 59. Thus, it is not required for the air dryer housing 21 to have the control input ports 4P, 4R, 4S. The air dryer housing 21 has a compressor control output port 4 to provide the second control signal CP2 for off-loading the compressor.

The first solenoid valve input port 61, the second solenoid valve input port 71, and the third solenoid valve input port 81 are in fluid communication with the dryer outlet 2. For illustration, the first solenoid valve input port 61, the second solenoid valve input port 71, and the third solenoid valve input port 81 may be in fluid communication with a portion of the dryer outlet line 28 in between the outlet check valve 25 and the dryer outlet 2.

The first solenoid valve outlet port 62 is connected to the purge valve control signal line 53, which is also connected to the purge valve control signal input 33. The second solenoid valve outlet port 72 is connected to the compressor control outlet port 4 to provide the second control signal CP2 to the compressor via the compressor off-loading line 13. The third solenoid valve output port 83 is connected to the switching valve control port 44 via the switching valve control signal line 57. The third solenoid valve output port 83 is also connected to the regeneration line 27.

The solenoid valve assembly 59, the purge valve 30, and the switching valve 40 are configured to operate as explained in association with Fig. 1. Thus, the air dryer 20 of Fig. 2 is configured to, inter alia, perform a regeneration of the desiccant cartridge 22 that does not affect the compressor discharge line 11 and/or to perform venting of the compressor discharge line 11 without affecting the pneumatic consumer system pressure. The housing 22 comprises an electric interface to receive the first electric control signal S1, the second electric control signal S2, and the third electric control signal S3 from an electronic control unit.

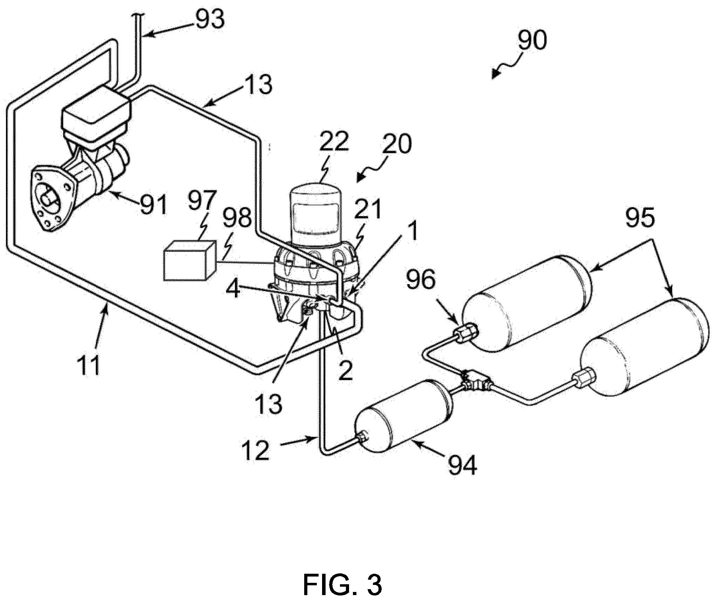

Fig. 3 shows a schematic representation of a pneumatic vehicle system 90 according to an embodiment. The pneumatic vehicle system 90 comprises an air dryer 20 that comprises the solenoid valve assembly 59, the purge valve 30, the switching valve 40, and the desiccant cartridge 22. The air dryer 20 may be configured and operative as explained with reference to Fig. 2. The pneumatic vehicle system 90 comprises the compressor 91. The compressor 91 is connected to a compressor intake line 93 having an intake opening for air intake. The compressor 91 is coupled to the air dryer 20 via the compressor discharge line 11 and the compressor off-loading control line 13. The compressor 91 is operative to enter an off-load state, e.g., idle or stopped, responsive to the second control pressure signal CP2 received via the compressor off-loading control line 13.

The pneumatic vehicle system 90 comprises an electronic control unit 97. The electronic control unit 97 is configured to generate the first electric control signal S1, the second electric control signal S2, and the third electric control signal S3 to control the solenoid valve assembly 59. The electronic control unit 97 is interfaced with the solenoid valve assembly 59 via one or several electric control signal link(s) 98.

The pneumatic vehicle system 90 may comprise components of a pneumatic consumer system and/or components that interface the air dryer 20 with the pneumatic consumer system, such as a supply tank 94 connected to the dryer outlet 2 via the supply line 12. The pneumatic consumer system may comprise pneumatic consumer system reservoir(s) 95 and other pneumatic components such as check valves 96.

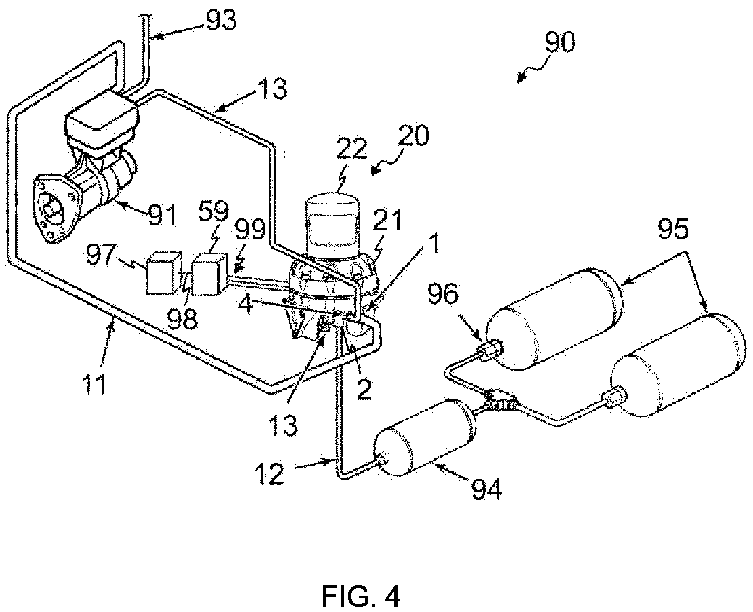

Fig. 4 shows a schematic representation of a pneumatic vehicle system 90 according to an embodiment. The pneumatic vehicle system 90 comprises an air dryer 20 and the solenoid valve assembly 59 separate from the air dryer 20. The air dryer 20 comprises the purge valve 30, the switching valve 40, and the desiccant cartridge 22. The air dryer 20 and the solenoid valve assembly 59 may be configured and operative as explained with reference to Fig. 1.

For an air dryer system 10 having one desiccant cartridge 22 (as shown in Fig. 1, Fig. 2, Fig. 3, and Fig. 4), the air dryer system 10 is operative to provide the various functions discussed herein by generating the control pressure signals using a solenoid valve assembly 59 that includes the first, second, and third solenoid valves 60, 70, 80. In this case, the air dryer system 10 may be configured in such a manner that the control pressure signals received for on-load operation, off-load operation, decreasing pneumatic consumer system pressure with running compressor 91, regeneration without affecting the compressor discharge line 11, and venting of the compressor discharge line 12 are provided by the first, second, and third solenoid valves 60, 70, 80. The air dryer system 10 may be configured in such a manner that the control pressure signals received for on-load operation, off-load operation, decreasing pneumatic consumer system pressure with running compressor 91, regeneration without affecting the compressor discharge line 11, and venting of the compressor discharge line 12 are provided by not more than three different solenoid valves 60, 70, 80. The solenoid valve assembly 59 may include more than three solenoid valves, e.g., when used in a twin chamber air dryer.

Fig. 5 shows a pneumatic circuit diagram of a pneumatic vehicle system 90 which comprises the compressor 91 and an air dryer system 10 that provides a twin chamber air dryer configuration. The air dryer system 10 comprises an air dryer 20, a further air dryer 120, and a solenoid valve assembly comprising the first solenoid valve 60, the second solenoid valve 70, the third solenoid valve 80, and a fourth solenoid valve 150. The air dryer 20 comprises the desiccant cartridge 22, the purge valve 30, the switching valve 40, the dryer outlet line 28 comprising the outlet check valve 25, and the regeneration line 27 comprising the regeneration check valve 26. The air dryer 20 comprises the dryer inlet 1, the dryer outlet 2, and the dryer exhaust 3. The air dryer 20 comprises the first control input port 4S, the second control input port 4P, and the third control input port 4R. These components of the air dryer 20 were already discussed herein and may be configured and operative as previously discussed in association with, e.g., Fig. 1.

The air dryer 20 comprises a selection control output port 2C that may be used for selecting one of the air dryer 20 and the further air dryer 120 for on-load operation or for regeneration. The selection control output port 2C is coupled to the dryer outlet line 28, at a location between the desiccant cartridge 22 and the outlet check valve 25.

The further air dryer 120 may have a construction identical to that of the air dryer 20. This facilitates manufacture and maintenance. The further air dryer 120 comprises a further desiccant cartridge 122, a further purge valve 130, and a further switching valve 140, a further dryer outlet line 128 comprising a further outlet check valve 125, and a further regeneration line 127 comprising a further regeneration check valve 126. The further air dryer 120 comprises a further dryer inlet 101, a further dryer outlet 102, and a further dryer exhaust 103. The further air dryer 120 comprises a further first control input port 104S, a further second control input port 104P, and a further third control input port 104R. These components of the further air dryer 120 may be configured and operative as previously discussed in association with, e.g., Fig. 1. The further air dryer 120 may comprise a further selection control output port 102C that may be rendered inoperative (e.g., closed) in the further air dryer 120.

The air dryer inlet 1 and the further air dryer inlet 101 are connected to the compressor discharge line 11. The air dryer outlet 2 and the further air dryer outlet 102 are connected to the supply line 12 to provide dried air to the pneumatic consumer system.

The first solenoid valve 60 has the first solenoid output port that is in fluid communication with both the first control input port 4P of the air dryer 4P and with the further first control input port 104P of the further air dryer 104P. The first solenoid valve 60 is configured to set the purge valve 30 and the further purge valve 130 to the second purge valve state. This causes the purge valve 30 to establish fluid communication between the dryer inlet 1 and the dryer exhaust 3 and causes the further purge valve 130 to establish fluid communication between the further dryer inlet 1 and the further dryer exhaust 103. This is useful for decreasing pneumatic consumer system pressure while the compressor 91 continues to pump and/or for venting the compressor discharge line 11.

The second solenoid valve 70 is operative to provide a second control pressure signal to the compressor 91 via the compressor off-loading control line 13, to selectively off-load the compressor 91. The second solenoid valve 70 has the second solenoid valve output port connected to the compressor off-loading control line 13.

The third solenoid valve 80 has the third solenoid control output port which is in fluid communication with both the second control input port 4R and the further second control input port 104R. Thus, the third solenoid valve 80 is configured to provide the regeneration control pressure signal to the second control input port 4R and the further second control input port 104R, it being noted that only one of the air dryer 20 and the further air dryer 120 being selected, by means of the fourth solenoid valve 150, for regeneration at any given time.

The fourth solenoid valve 150 comprises a fourth solenoid valve input port 151 in fluid communication with the supply line 12. The fourth solenoid valve 150 comprises a fourth solenoid valve input port 152 in fluid communication with the third control input port 4S of the air dryer 20 via a fourth control signal line 153 to provide a fourth control pressure signal CP4. Thus, the air dryer system 10 is configured in such a way that different solenoid valves 150, 80 are provided to control the switching valve 40, via the fourth solenoid valve 150, and to provide the regeneration control pressure signal, via the third solenoid valve 80. The fourth solenoid control valve 50 is controllable by a fourth electric control signal S4, which may be generated by the electric control unit 97.

The fourth solenoid valve 150 is configured to control the switching valve 40 so as to implement a selection function of selecting one of the air dryer 20 and the further air dryer 120 for on-load operation, in which air is dried by the selected one of the air dryer 20 and the further air dryer 120, and for regeneration, in which regeneration is performed for one of the air dryer 20 and the further air dryer 120 for on-load operation, depending on the output of the fourth solenoid valve. Thus, the fourth solenoid valve 150 implements a switch between the desiccant cartridge 22 and the further desiccant cartridge 122 for on-load operation and regeneration, respectively. To implement this change, the selection control output port 2C is in fluid communication, via the selection interconnection line 105, with the further third control input port 104S of the further air dryer 120.

The solenoid valve assembly 59 may be configured such that each of the first, second, third, and fourth solenoid valves 60, 70, 80, 150 outputs a first pneumatic signal value (e.g., no positive pressure at the solenoid valve output ports) for an on-load state in which the compressor pumps and the air dryer 20 provides dried air at the dryer outlet 2. Thereby, the solenoid valve assembly 59 is operative to provide the control pressure signals that set the air dryer assembly 10 to the on-load state in which the cartridge 22 of the air dryer 20 provides dried air.

The solenoid valve assembly 59 may be configured such that each of the first, second, and third solenoid valves 60, 70, 80 outputs a first pneumatic signal value, e.g., no positive pressure at the solenoid valve output ports, and the fourth solenoid valve 150 output a second pneumatic signal value, e.g., the pressure at the supply line 12, for an on-load state in which the compressor pumps and the further air dryer 120 provides dried air at the further dryer outlet 102. Thereby, the solenoid valve assembly 59 is operative to provide the control pressure signals that set the air dryer assembly 10 to the on-load state in which the further cartridge 122 of the further air dryer 20 provides dried air. The selection or switch between cartridges is attained by the control pressure signal provided by the fourth solenoid valve 150 to the third control input port 4S of the air dryer 20 and then provided, via the selection control output port 2C and the selection interconnection line 105 to the further third control input port 104S of the further air dryer 120.

The solenoid valve assembly 59 may be configured such that each of the first, third, and fourth solenoid valves 60, 80, 150 outputs the first pneumatic signal value, e.g., no positive pressure at the solenoid valve output ports, and the second solenoid valve 70 outputs the second pneumatic signal value, e.g., the pressure at the supply line 12, to off-load the compressor, e.g., for setting the compressor to idle mode or stopping the compressor. Thereby, the solenoid valve assembly 59 may be operative to provide the control pressure signals that set the air dryer system 10 to the off-load state.

The solenoid valve assembly 59 may be configured such that both the first solenoid valve 60 and the third solenoid valve 80 outputs the second pneumatic signal value, e.g., the pressure at the supply line 12, and both the second solenoid valve 70 and the fourth solenoid valve 150 outputs the first pneumatic signal value, e.g., no positive pressure at solenoid valve output port 72, for decreasing pressure in the pneumatic consumer system connected to the supply line 12 while the compressor 91 continues to pump.

The solenoid valve assembly 59 may be configured such that each of the second solenoid valve 70, the third solenoid valve 80, and the fourth solenoid valve outputs the second pneumatic signal value, e.g., the pressure at the supply line 12, and the first solenoid valve 60 outputs the first pneumatic signal value, e.g., no positive pressure at solenoid valve output port 72, for performing regeneration of the cartridge 22 of the air dryer 20.

The solenoid valve assembly 59 may be configured such that both the second solenoid valve 70 and the third solenoid valve 80 outputs the second pneumatic signal value, e.g., the pressure at the supply line 12, and both the first solenoid valve 60 and the fourth solenoid valve 150 outputs the first pneumatic signal value, e.g., no positive pressure at solenoid valve output port 72, for performing regeneration of the further cartridge 122 of the further air dryer 120.

The solenoid valve assembly 59 may be configured such that both the first solenoid valve 60 and the second solenoid valve 70 output the second pneumatic signal value, e.g., the pressure at the dryer outlet 2, and the third solenoid valve outputs 80 the first pneumatic signal value, e.g., no positive pressure at the third solenoid valve output port, for performing venting of the compressor discharge line 11. In this case, the output of the fourth solenoid valve 150 may be either the first or the second pneumatic signal value. Thereby, the compressor discharge line is vented without affecting pneumatic consumer system pressure, e.g., without affecting the pressure in the supply line 12.

Thus, the solenoid valve assembly 59 in association with the pneumatically controllable valve assembly comprising the purge valve 30, the switching valve 40, the further purge valve 130, and the further switching valve 140 is configured to provide more versatile air dryer system functions. In particular, the air dryer system 10 is configured to allow a regeneration to be performed for the cartridge 22 and the further cartridge 122, respectively without affecting the compressor discharge line 11. The air dryer system 10 is configured to perform venting of the compressor discharge line 11 without affecting the pressure in the pneumatic consumer system, e.g., without affecting the pressure in the supply line 12.

For an air dryer system 10 having a twin chamber configuration and comprising the desiccant cartridge 22 and the further desiccant cartridge 122, the air dryer system 10 is operative to provide the various functions discussed herein by generating the control pressure signals using a solenoid valve assembly 59 that includes the first, second, third, and fourth solenoid valves 60, 70, 80, 150. In this case, the air dryer system 10 may be configured in such a manner that the control pressure signals received for on-load operation using the desiccant cartridge 22 for drying, on-load operation using the further desiccant cartridge 122 for drying, off-load operation, decreasing pneumatic consumer system pressure with running compressor 91, regeneration of the desiccant cartridge 22 without affecting the compressor discharge line 11, regeneration of the further desiccant cartridge 22 without affecting the compressor discharge line 11, and venting of the compressor discharge line 12 are provided by the first, second, third, and fourth solenoid valves 60, 70, 80, 150. The electronic control unit 97 is operative to provide a fourth electric control signal S4 to control the fourth solenoid valve 150.

Fig. 6 shows an air dryer system 10 having a twin chamber configuration. The air dryer system 10 comprises the air dryer 20 and the further air dryer 120. Both the air dryer 20 and the further air dryer 120 may have a construction and operation identical to the air dryer 20 of Fig. 1. As compared to Fig. 5, the air dryer 20 and the further air dryer 120 does not have switching control output port 2C.

Selection of one of the air dryer 20 and the further air dryer 120 for on-load operation is performed by a fourth solenoid control valve 150 and a further fourth solenoid control valve 160. The further fourth solenoid control valve 160 has a further fourth solenoid valve input port 161 and a further fourth solenoid valve output port 162 connected to the further third control input port 104S via a further fourth control signal line 163 to provide a further fourth control pressure signal CP4'. The further fourth solenoid control valve 160 is controllable by a further fourth electric control signal S4', which may be generated by the electric control unit 97.

The solenoid valve assembly 59 may be operative such that one of the fourth solenoid valve 150 and the further fourth solenoid valve 160 outputs the first pneumatic signal value, e.g., no positive pressure at the output port, and the other one of the fourth solenoid valve 150 and the further fourth solenoid valve 160 outputs the second pneumatic signal value, e.g., the pressure at the supply line 12, when performing either one of on-load operation and regeneration. Thereby, it is selected whether the desiccant cartridge 22 or the further desiccant cartridge 122 dries the air or is regenerated. Other aspects of the operation of the solenoid valve assembly 59 correspond to those described in association with Fig. 5.

For an air dryer system 10 having a twin chamber configuration and comprising the desiccant cartridge 22 and the further desiccant cartridge 122, the air dryer system 10 of Fig. 6 is operative to provide the various functions discussed herein by generating the control pressure signals using a solenoid valve assembly 59 that includes the first, second, third, and fourth solenoid valves 60, 70, 80, 150 and the further fourth solenoid valve 160. In this case, the air dryer system 10 may be configured in such a manner that the control pressure signals received for on-load operation using the desiccant cartridge 22 for drying, on-load operation using the further desiccant cartridge 122 for drying, off-load operation, decreasing pneumatic consumer system pressure with running compressor 91, regeneration of the desiccant cartridge 22 without affecting the compressor discharge line 11, regeneration of the further desiccant cartridge 22 without affecting the compressor discharge line 11, and venting of the compressor discharge line 11 are provided by the first, second, third, and fourth solenoid valves 60, 70, 80, 150 and the further fourth solenoid valve 160. While five solenoid valves are required for the air dryer system 10 of Fig. 6, the air dryer system 10 provides enhanced switching consistency and signal independence.

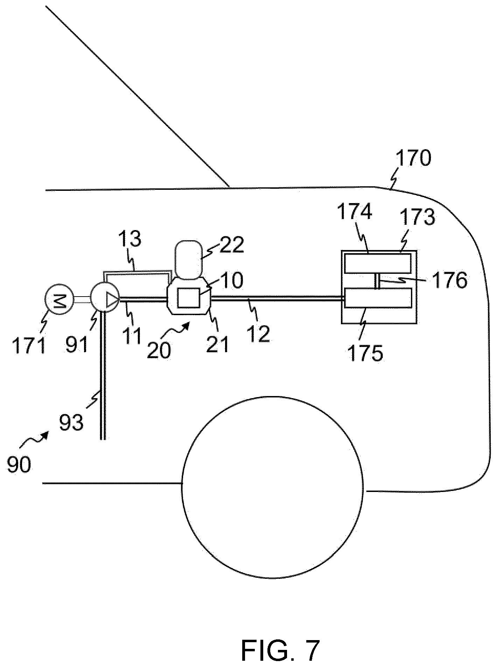

Fig. 7 is a schematic view of a vehicle 170 comprising a pneumatic vehicle system 90. The pneumatic vehicle system 170 comprises an air dryer system 10 according to an aspect or embodiment, which may be provided in the air dryer 20. The pneumatic vehicle system 170 comprises a compressor 91, a drive 171 configured to drive the compressor 91 and an intake line 93 having an intake opening for ambient air intake. The pneumatic vehicle system 170 comprises the compressor discharge line 11 connected to a discharge port of the compressor 91 and to the dryer inlet 1 of the air dryer 20. The pneumatic vehicle system 170 comprises the compressor off-loading control line 13 which is connected to an off-loading control port of the compressor 91 and configured to provide the second control pressure signal CP2 to the compressor 91.

The pneumatic vehicle system 170 comprises a pneumatic consumer system 173. The pneumatic consumer system 173 comprises at least one pneumatic consumer 174. The pneumatic consumer system 173 is in fluid communication with, and may be directly connected to, the supply line 12. The pneumatic consumer system 173 may comprise at least one pneumatic consumer system valve 175 interconnected between the supply line 12 and the at least one pneumatic consumer 174. The pneumatic consumer system 173 may also comprise pneumatic consumer system connection(s) 176 configured to provide the dried air to the at least one pneumatic consumer 174. As previously explained, the pneumatic vehicle system 170 may comprise a tank viand/or at least one controllable valve, as illustrated in Fig. 3 and Fig. 4, coupled to the supply line 12. The vehicle 170 may in particular be a commercial vehicle.

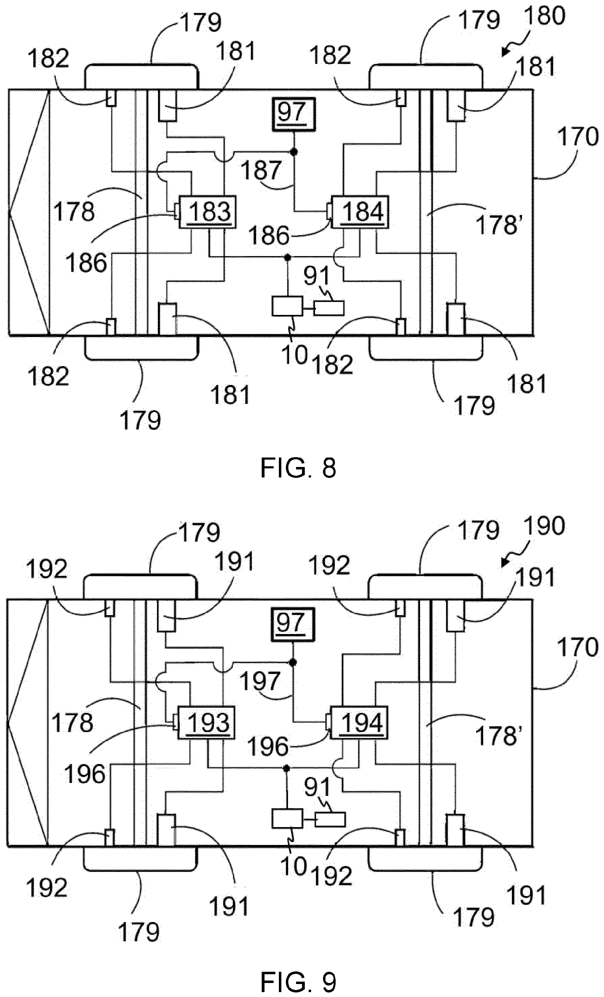

Fig. 8 shows a schematic representation of a vehicle 170 comprising a pneumatic vehicle system that comprises a pneumatic braking system 180, such as an electropneumatic braking system. The vehicle 170 may be a commercial vehicle. The vehicle 170 has a plurality of wheels 179 and a plurality of axles 178, 178'.

The pneumatic braking system 180 comprises pneumatic consumers which comprise a plurality of brake cylinders 181. The plurality of brake cylinders 181 are in fluid communication with output ports of at least one modulator 183, 184. In the illustrated implementation, the pneumatic braking system 180 comprises a front axle modulator 183 having an electric control interface186 connected to the electronic control unit 97 via at least one electric modulator control line 187. The pneumatic braking system 180 comprises a rear axle modulator 184 having an electric control interface186 connected to the electronic control unit 97 via the at least one electric modulator control line 187. The modulator(s) 183, 184 may also be interfaced with sensors 182, such as wheel speed sensors.

An air supply system comprising the compressor 91 and the air dryer system 10 provides dried pressure air, which may be provided to the brake cylinders 181 under the control of the modulators 183, 184.

Fig. 9 shows a schematic representation of a vehicle 170 comprising a pneumatic vehicle system that comprises a pneumatic levelling system 190, such as an electropneumatic levelling system. The vehicle 170 may be a commercial vehicle. The vehicle 170 has a plurality of wheels 179 and a plurality of axles 178, 178'.

The pneumatic levelling system 190 comprises pneumatic consumers which comprise a plurality of levelling valves 191. The plurality of levelling valves 191 are in fluid communication with output ports of at least one modulator 193, 194. In the illustrated implementation, the pneumatic levelling system 190 comprises a front axle modulator 193 having an electric control interface186 connected to the electronic control unit 97 via at least one electric modulator control line 197. The pneumatic levelling system 190 comprises a rear axle modulator 194 having an electric control interface186 connected to the electronic control unit 97 via the at least one electric modulator control line 197. The modulator(s) 193, 194 may also be interfaced with sensors 192, such as distance sensors.

An air supply system comprising the compressor 91 and the air dryer system 10 provides dried pressure air, which may be provided to the levelling valves 191 under the control of the modulators 193, 194.

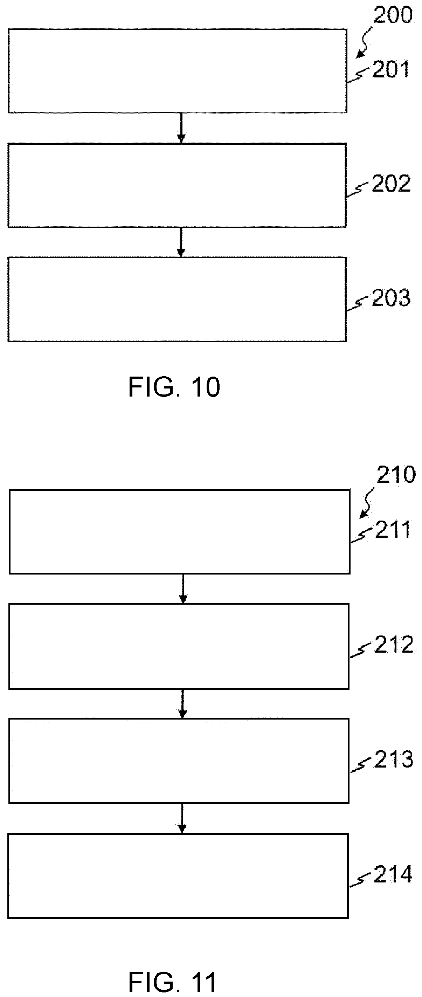

Fig. 10 is a flow chart of a method 200 of controlling a pneumatic vehicle system. The method 200 may be performed automatically by or using the air dryer system 10. The method 200 comprises generating 201, by the first solenoid valve 60, the first control pressure signal CP1 to control the purge valve 30 of the air dryer system 10. The purge valve 30 may be controlled to selectively establish fluid communication between the dryer inlet 1 and the dryer exhaust 3 via the purge valve 30. Generating the first control pressure signal CP1 may comprise controlling, by the ECU 79, the first solenoid valve 60.

The method 200 comprises generating 202, by the second solenoid valve 70, the second control pressure signal CP2 for provision to the compressor 91 via the compressor off-loading control line 13. The compressor 91 may be controlled to selectively off-load the compressor, e.g., idle ode or stopped. Generating the second control pressure signal CP2 may comprise controlling, by the ECU 79, the second solenoid valve 70.

The method 200 comprises generating 203, by the third solenoid valve 70, the third control pressure signal CP3 to control the switching valve 40 and the regeneration control pressure signal CPR for provision to the regeneration line 27. The switching valve 40 may be controlled to selectively block fluid communication between the dryer inlet 1 and the desiccant cartridge 22 and to selectively establish fluid communication between the desiccant cartridge and the dryer exhaust 3. Generating the third control pressure signal CP3 and the regeneration control pressure signal CPR may comprise controlling, by the ECU 79, the third solenoid valve 80.

In the method 200, the various control pressure signals are generated such that the functions of on-load operation, off-load operation, decreasing the pressure in the supply line via the air dryer system without requiring the compressor to be in an off-load state, regeneration of the desiccant cartridge without affecting the compressor discharge line, and venting of the compressor discharge line without affecting the pneumatic consumer system pressure are selectively attained.

Fig. 11 is a flow chart of a method 210 of controlling a pneumatic vehicle system. The method 210 may be performed automatically by or using the air dryer system 10 having a twin chamber configuration, such as the air dryer system 10 of Fig. 5 or the air dryer system 10 of Fig. 6. The method 210 comprises generating 211, by the first solenoid valve 60, the first control pressure signal CP1 to control the purge valve 30 and the further purge valve 130 of the air dryer system 10. The purge valve 30 may be controlled to selectively establish fluid communication between the dryer inlet 1 and the dryer exhaust 3 via the purge valve 30. The further purge valve 130 may be controlled to selectively establish fluid communication between the further dryer inlet 101 and the further dryer exhaust 103 via the further purge valve 130. Generating the first control pressure signal CP1 may comprise controlling, by the ECU 79, the first solenoid valve 60.

The method 210 comprises generating 212, by the second solenoid valve 70, the second control pressure signal CP2 for provision to the compressor 91 via the compressor off-loading control line 13. The compressor 91 may be controlled to selectively off-load the compressor, e.g., idle ode or stopped. Generating the second control pressure signal CP2 may comprise controlling, by the ECU 79, the second solenoid valve 70.

The method 210 comprises generating 213, by the third solenoid valve 70, the regeneration control pressure signal CPR for provision to the regeneration line 27 and the further regeneration line 127. Generating the third control pressure signal CP3 and the regeneration control pressure signal CPR may comprise controlling, by the ECU 79, the third solenoid valve 80.

The method 210 comprises generating 214, by a fourth solenoid valve 150 (Fig. 5) or by a fourth solenoid valve 150 and a further fourth solenoid valve 160 (Fig. 6), at least one third control pressure signal to control the switching valve 40 and the further switching valve 140. The switching valve 40 may be controlled to selectively block fluid communication between the dryer inlet 1 and the desiccant cartridge 22 and to selectively establish fluid communication between the desiccant cartridge and the dryer exhaust 3. The further switching valve 140 may be controlled to selectively block fluid communication between the further dryer inlet 101 and the further desiccant cartridge 122 and to selectively establish fluid communication between the further desiccant cartridge 122 and the further dryer exhaust 103. Generating the at least one third control pressure signal may comprise controlling, by the ECU 79, the switching valve 40 and the further switching valve 140.

In the method 220, the various control pressure signals are generated such that the functions of on-load operation using the desiccant cartridge 22 for drying, on-load operation using the further desiccant cartridge 122 for drying, off-load operation, decreasing the pressure in the supply line via the air dryer system without requiring the compressor to be in an off-load state, regeneration of the desiccant cartridge 22 without affecting the compressor discharge line, regeneration of the further desiccant cartridge 122 without affecting the compressor discharge line, and venting of the compressor discharge line without affecting the pneumatic consumer system pressure are selectively attained. The techniques disclosed herein are particularly useful in association with a commercial vehicle, without being limited thereto.

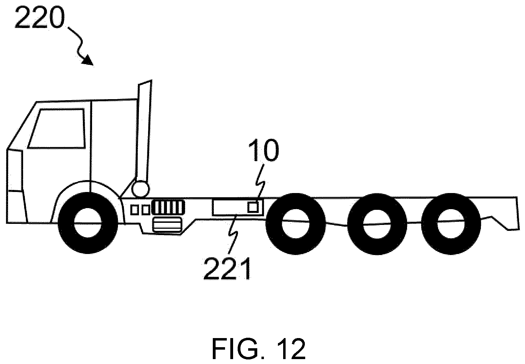

Fig. 12 is a schematic representation of a commercial vehicle 220. The commercial vehicle 220 comprises at least one pneumatic vehicle system 221. The at least one pneumatic vehicle system 220 comprises an air dryer system 10 according to an embodiment.

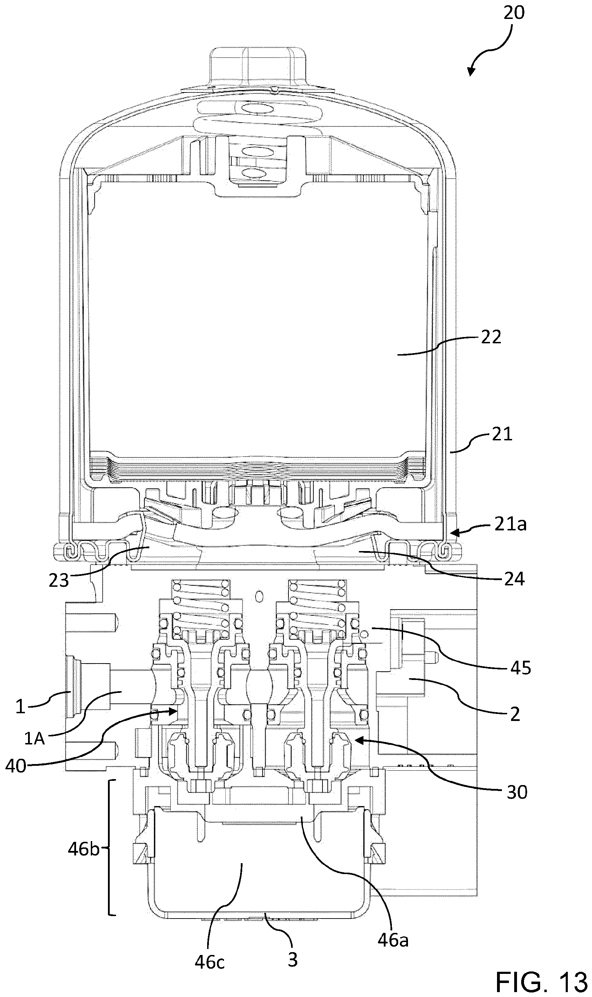

Fig. 13 schematically illustrates an air dryer 20 for an air dryer system 10 according to an embodiment. The air dryer 20 comprises an air dryer housing 21. In the air dryer housing 21, a cartridge holder 21a receiving a desiccant cartridge 22 is arranged with an essentially horizontal orientation of the cartridge holder 21 according to a regular mounting orientation of the air dryer 20. Furthermore, the air dryer 20 comprises a valve housing 45 mechanically connected to the cartridge holder 21a. In the valve housing 45, a purge valve 30 and a switching valve 40 forming a pneumatically controlled valve assembly 30, 40 are arranged in parallel. The purge valve 30 and the switching valve 40 are configured to selectively exhaust air from a compressor discharge line 11 connected to an air dryer inlet 1 of the air dryer 20 and/or from the desiccant cartridge 22 via a dryer exhaust 3 of the air dryer 20. The purge valve 30 and the switching valve 40 may be configured according to any of the aforementioned aspects and embodiments. By arranging the purge valve 30 and the switching valve 40 in a parallel manner in the valve housing 45, a compact arrangement with a robust design may be accomplished, allowing for short fluid paths and shared components as a common exhaust volume 46c as further described below. The purge valve 30 and the switching valve 40 may comprise essentially the same mechanical structure and components. Preferably, the purge valve 30 and the switching valve 40 are individually controllable by means of separately provided pressure control signals.

As apparent from Fig. 13, the purge valve 30 and the switching valve 40 are connected to the air dryer inlet 1 via a dryer inlet line 1A. Furthermore, the purge valve 30 and the switching valve 40 may selectively open or block a fluid communication to ambient atmosphere via the dryer exhaust 3. The switching valve 40 may furthermore selectively open or block a fluid communication to a desiccant cartridge port 23 in order to selectively enable drying compressed air received at the air dryer inlet 1 using the desiccant cartridge 22 or to selectively enable venting the desiccant cartridge 22 for system pressure decrease or regeneration of the desiccant cartridge 22. The desiccant cartridge 22 may furthermore be connected via a further desiccant cartridge port 24 to an air dryer outlet 2 via a dryer outlet line 28 not further shown in Fig. 13.

As illustrated in Fig. 13, the purge valve 30 and the switching valve 40 extend vertically to the cartridge holder 21a, thus facilitating removal of water, contaminants and residues. Furthermore, the vertical orientation may assist in keeping the purge valve 30 and the switching valve 40 in their deactivated valve states, for instance by gravity-assisted pressing of a lower piston element 304 to a first purge valve seat 47a or to a first switching valve seat 48a as further explained below.

As further apparent from Fig. 13, the purge valve 30 and the switching valve 40 comprise a common bottom element 46a which may be regarded as a part of the valve housing 45. The common bottom element 46a may essentially extend in parallel to the cartridge holder 21a. The common bottom element 46a may be positioned in a bottom area 46b of the valve housing 45. By providing a common bottom element 46a for both the purge valve 30 and the switching valve 40, a compact and robust arrangement with a reduced number of parts and a low mechanical complexity is provided.

As furthermore depicted in Fig. 13, the purge valve 30 and the switching valve 40 share a common exhaust volume 46c in the bottom area 46b of the valve housing 45. In this way, the compact arrangement may be further improved and water or oil contaminants may beneficially be removed due to the low position of the common exhaust volume 46c in the bottom area 46b. The common exhaust volume 46c may lead to or form the air dryer exhaust 3.

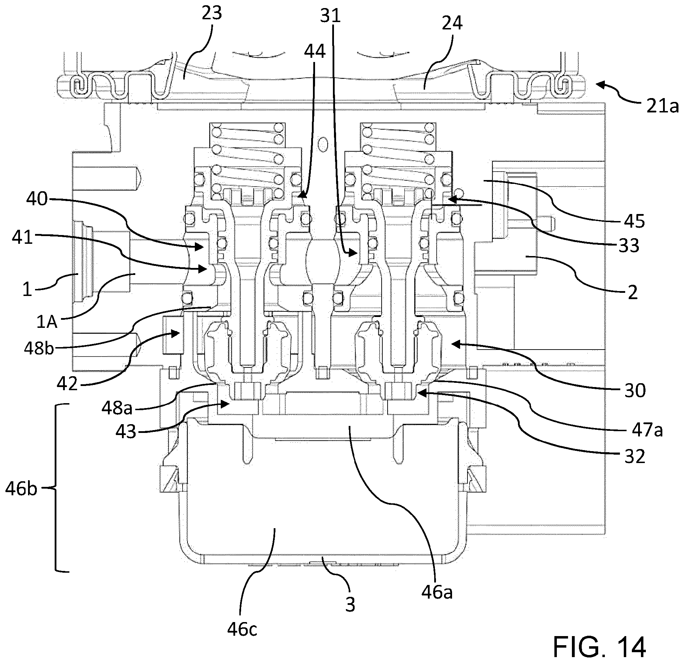

Fig. 14 provides an enlarged view of the pneumatically controlled valve assembly 30, 40 of the air dryer 20 depicted in Fig. 13. As apparent from Fig. 14, the purge valve 30 comprises a first purge valve port 31 connected to the dryer inlet line 1A and a second purge valve port 32 connected to the dryer exhaust 3. The purge valve 30 may be pneumatically controllable via a purge valve control input 33. Furthermore, the switching valve 40 comprises a first switching valve port 41 connected to the dryer inlet line 1A, a second switching valve port 42 connected to the desiccant cartridge 22, and a third switching valve port 43 connected to the dryer exhaust 3. The switching valve 40 may be pneumatically controllable via a switching valve control input 44.

As apparent from Fig. 14, the common bottom element 46a receiving the purge valve 30 and the switching valve 40 comprises a first purge valve seat 47a for the purge valve 30 and a first switching valve seat 48a for the switching valve 40. As illustrated, the first purge valve seat 47a and the first switching valve seat 48a may comprise similar or identical geometrical shapes and dimensions. Furthermore, the valve housing 45 comprises a second switching valve seat 48b for the switching valve 40. Providing a first switching valve seat 48a and a second switching valve seat 48b for the switching valve 40 in combination with only providing a first purge valve seat 47a for the purge valve 30 enables a compact and efficient implementation of the switching valve 40 as a 3/2 way valve and the purge valve 30 as a 2/2 way valve.

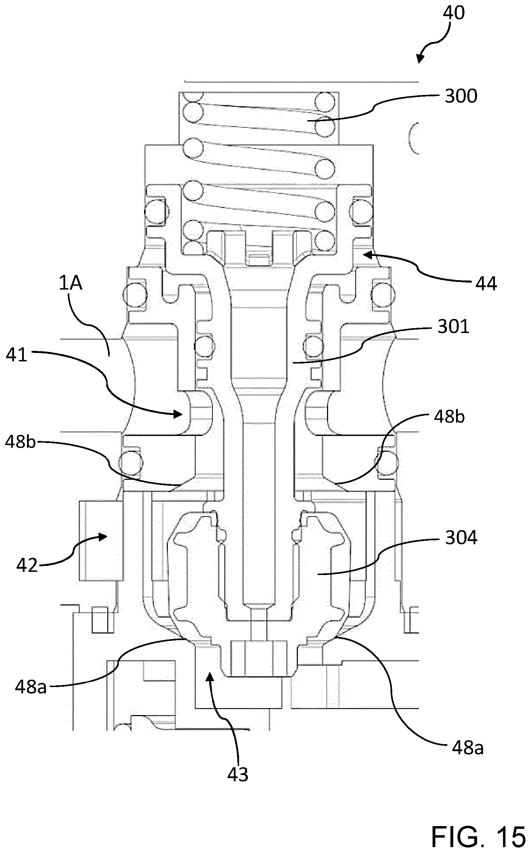

Fig. 15 provides an enlarged view of the switching valve 40 of the pneumatically controlled valve assembly 30, 40 depicted in Fig. 14 to further illustrate the first switching valve port 41, the second switching valve port 42 and the third switching valve port 43. According to the depicted embodiment, the switching valve 40 comprises an upper piston element 301 and a lower piston element 304 secured to each other. The lower piston element 304 is configured to contact the first switching valve seat 48a when the switching valve 40 is in a first switching valve state, in which the switching valve 40 opens a fluid communication between the dryer inlet line 1A and the desiccant cartridge 22 via the first switching valve port 41 and the second switching valve port 42 and in which the switching valve 40 blocks a fluid communication between the desiccant cartridge 22 and the dryer exhaust 3 via the second switching valve port 42 and the third switching valve port 43. The lower piston element 304 is furthermore configured to contact the second switching valve seat 48b when the switching valve 40 is in a second switching valve state, in which the switching valve 40 blocks a fluid communication between the dryer inlet line 1A and the desiccant cartridge 22 via the first switching valve port 41 and the second switching valve port 42 and in which the switching valve 40 opens a fluid communication between the desiccant cartridge 22 and the dryer exhaust 3 via the second switching valve port 42 and the third switching valve port 43. The first switching valve state may correspond to a deactivated state of the switching valve 40 and the second switching valve state may correspond to an activated state of the switching valve 40. The switching valve 40 may be activated by the switching valve control input 44 and may be automatically reset by a return spring 300 in the absence of an input signal at the switching valve control input 44.

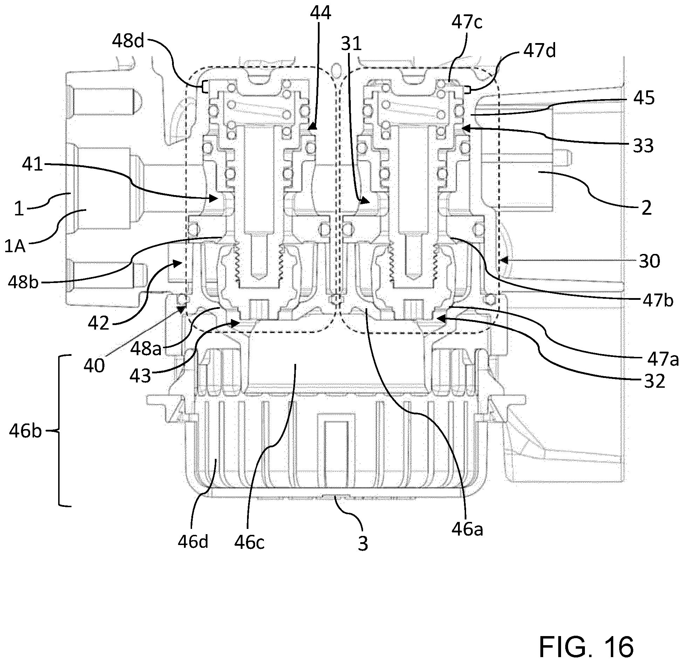

Fig. 16 depicts a pneumatically controlled valve assembly 30, 40 of an air dryer 20 according to another embodiment. The pneumatically controlled valve assembly 30, 40 may comprise an essentially similar structure and operating principle compared to the pneumatically controlled valve assembly 30, 40 described with reference to Figs. 13 to 15. In contrast to the pneumatically controlled valve assembly 30, 40 depicted in Figs. 13 to 15, the pneumatically controlled valve assembly 30, 40 illustrated in Fig. 16 comprises a valve housing 45 providing a second purge valve seat 47b for the purge valve 30 and a blocking element 47c for limiting a purge valve stroke 47d of the purge valve 30 to a lower valve stroke compared to a switching valve stroke 48d of the switching valve 40. In this way, the valve housing 45 may comprise identical outlines for the purge valve 30 and the switching valve 40, thus allowing for easier manufacture of the air dryer components while an efficient implementation of the switching valve 40 as a 3/2 way valve and the purge valve 30 as a 2/2 way valve is ensured.

As further apparent from Fig. 16, a silencer 46d is arranged in the common exhaust volume 46c of the switching valve 40 and the purge valve 30, thus improving noise reduction upon venting processes. As illustrated, it may be advantageous to provide a single silencer 46d for both the purge valve 30 and the switching valve 40 in order to reduce the mechanical complexity and to selectively use a larger silencer compared to separate silencer options for each valve.

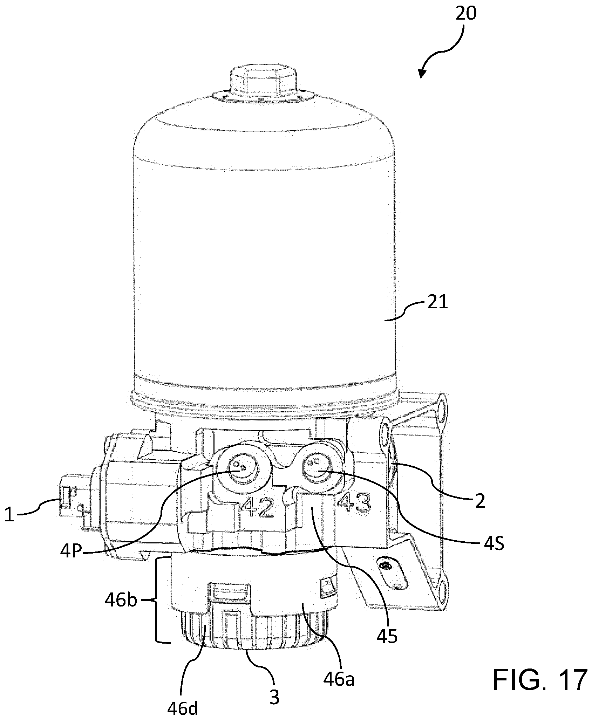

Fig. 17 provides a perspective front view of the air dryer 20 depicted in Fig. 13, thus illustrating a possible configuration of the air dryer 20 according to an embodiment. Besides the air dryer inlet 1, the air dryer outlet 2, the air dryer housing 21 and the valve housing 45 already described above with reference to Fig. 13, the illustrated air dryer 20 comprises a first control input port 4P in communication with the purge valve control input 33 of the purge valve 30 and a further control input port 4S in communication with the switching valve control input 44 of the switching valve 40. In this way, the purge valve 30 and the switching valve 40 may be individually controllable by associated control input ports 4P, 4S. A control valve assembly, as e.g. the solenoid valve assembly 59 described above, may be connected to the control input ports 4P, 4S in order to provide control pressure signals to the purge valve control input 33 of the purge valve 30 via the first control input port 4P and to the switching valve control input 44 via the further control input port 4S.

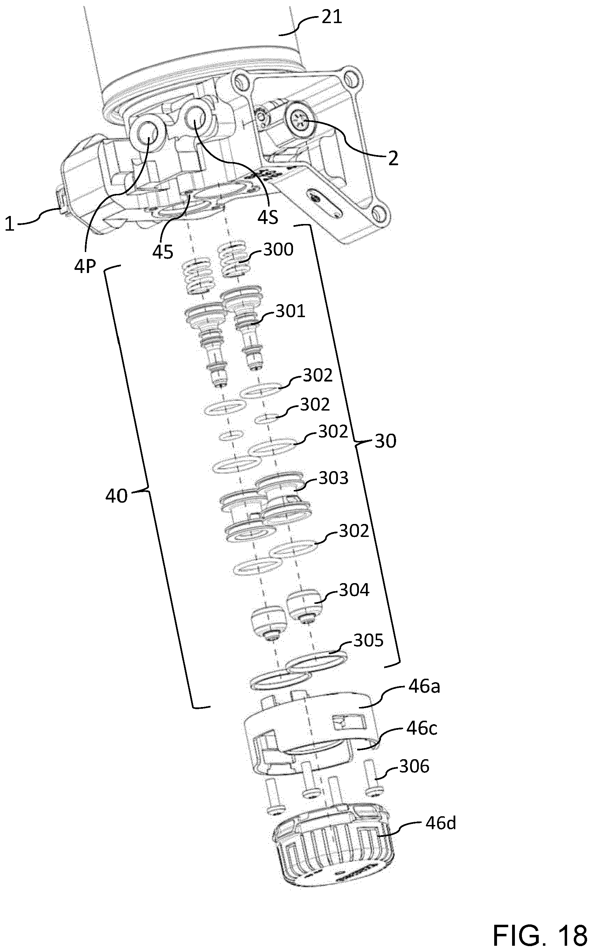

Fig. 18 provides a perspective front view of the air dryer 20 depicted in Fig. 13 in combination with an exploded view of the pneumatically controlled valve assembly 30, 40 of the air dryer 20 according to Fig. 14. As apparent from the exploded view, the pneumatically controlled valve assembly 30, 40 may essentially be constructed to comprise similar or identical valve components to form the purge valve 30 and the switching valve 40, thus providing a simple, cost-effective and easy-to-assemble valve arrangement. In detail, each of the purge valve 30 and the switching valve 40 may comprise at least one of a return spring 300 for automatic valve reset upon the absence of a pneumatic control signal at the purge valve control input 33 or at the switching valve control input 44, an upper piston element 301, a lower piston element 304 configured to be mechanically secured to the upper piston element 301 by means of an insert 303, one or several o-rings 302 and a gasket 305. In this way, a robust and reliably operable valve design may be provided. The pneumatically controlled valve assembly 30, 40 may be supported by the common bottom element 46 further providing a common exhaust volume 46c for both the purge valve 30 and the switching valve 40. As further depicted, a common silencer 46d for both the purge valve 30 and the switching valve 40 may be attached to the common bottom element 46, for instance by being screwed to the common bottom element 46 via assembly screws 306.

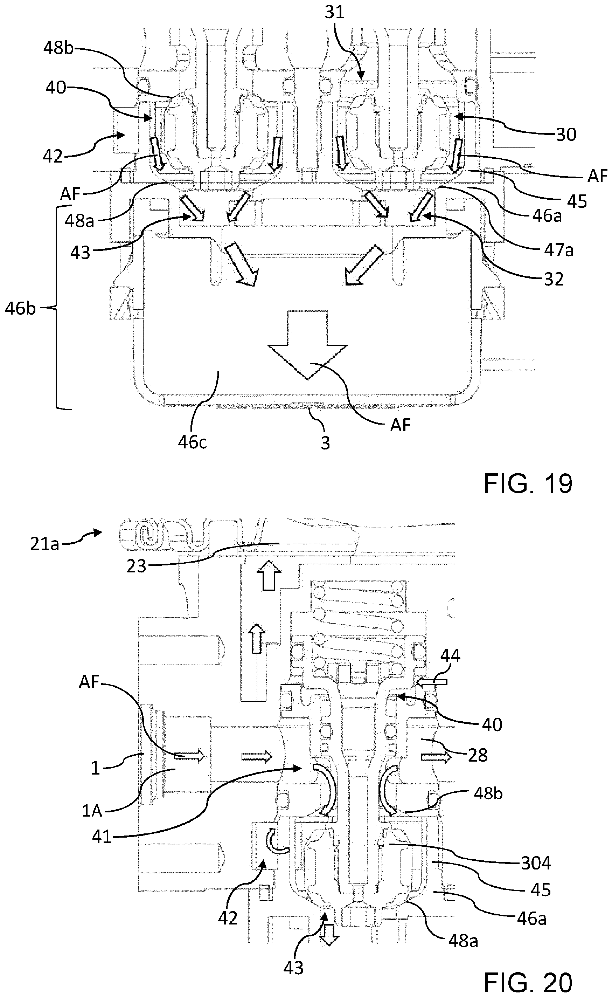

Fig. 19 provides a sectional representation of a bottom area 46b of the pneumatically controlled valve assembly 30, 40 depicted in Fig. 13 in a venting state in which air is exhausted both from a compressor discharge line 11 connected to the air dryer inlet 1 and from the desiccant cartridge 22 via the dryer exhaust 3. For this, the purge valve 30 may be activated to enter the second purge valve state and the switching valve 40 may be activated to enter the second switching valve state as explained above. As indicated by the arrows representing airflows AF, venting airflows may be allowed to flow from the second switching valve port 42 connected to the air dryer cartridge 22 and from the first purge valve port 31 connected to the dryer inlet line 1A to the dryer exhaust 3 via the common exhaust volume 46c.

Fig. 20 provides a sectional representation of the switching valve 40 of the pneumatically controlled valve assembly 30, 40 depicted in Fig. 13 in a first switching valve state. In the first switching valve state, the switching valve 40 provides fluid communication between the first switching valve port 41 and the second switching valve port 42 while concurrently blocking fluid communication between the second switching valve port 42 and the third switching valve port 43. In the first switching valve state, a pneumatic input signal at the switching valve control input 44 may be absent, maintaining the switching valve 40 in a deactivated state in which the lower piston element 304 contacts the first switching valve seat 48a. As indicated by the arrows representing an airflow AF, compressed air provided by a compressor 91 connected to the dryer inlet 1 may be guided to the first switching valve port 41 via the dryer inlet line 1A, flow through the switching valve 40 passing the second switching valve seat 48b and leaving the switching valve 40 at the second switching valve port 42 and flow to the desiccant cartridge 22 via the desiccant cartridge port 23 in order to be dried by means of the desiccant cartridge 22.

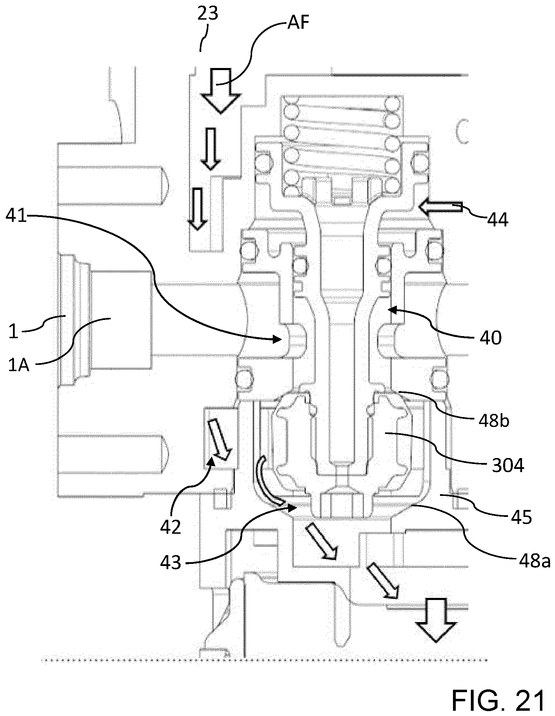

Fig. 21 provides a sectional representation of the switching valve 40 of the pneumatically controlled valve assembly 30, 40 depicted in Fig. 13 in the second switching valve state. In the second switching valve state, the switching valve 40 provides fluid communication between the second switching valve port 42 and the third switching valve port 43 while concurrently blocking fluid communication between the first switching valve port 41 and the second switching valve port 42. In the second switching valve state, a pneumatic input signal at the switching valve control input 44 may be present, maintaining the switching valve 40 in an activated state in which the lower piston element contacts the second switching valve seat 48b. As indicated by the arrows representing an airflow AF, which may correspond to a regeneration airflow, the airflow AF may leave the desiccant cartridge 22 via the desiccant cartridge port 23, enter the switching valve 40 at the second switching valve port 42, pass the first switching valve seat 48a and leave the switching valve 40 at the third switching valve port 43 to be vented via the dryer exhaust 3.

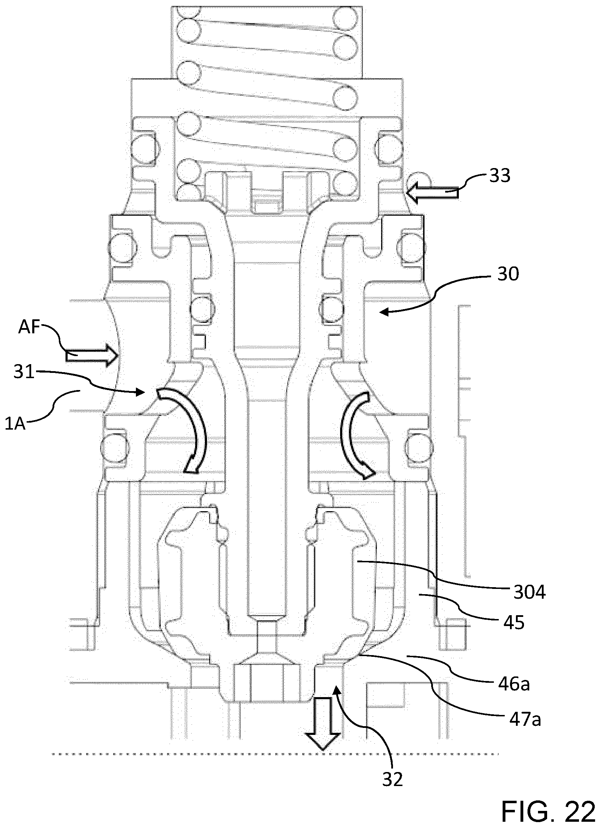

Fig. 22 provides a sectional representation of the purge valve 30 of the pneumatically controlled valve assembly 30, 40 depicted in Fig. 13 in a first purge valve state. In the first purge valve state, the purge valve 30 blocks fluid communication between the first purge valve port 31 and the second purge valve port 32, thus preventing an airflow AF entering the purge valve 30 via the first purge valve port 31 to pass the first purge valve seat 47a for leaving in a direction to the dryer exhaust 3 via the second purge valve port 32. In the first purge valve state, a pneumatic input signal at the purge valve control input 33 may be absent, maintaining the purge valve 30 in a deactivated state.

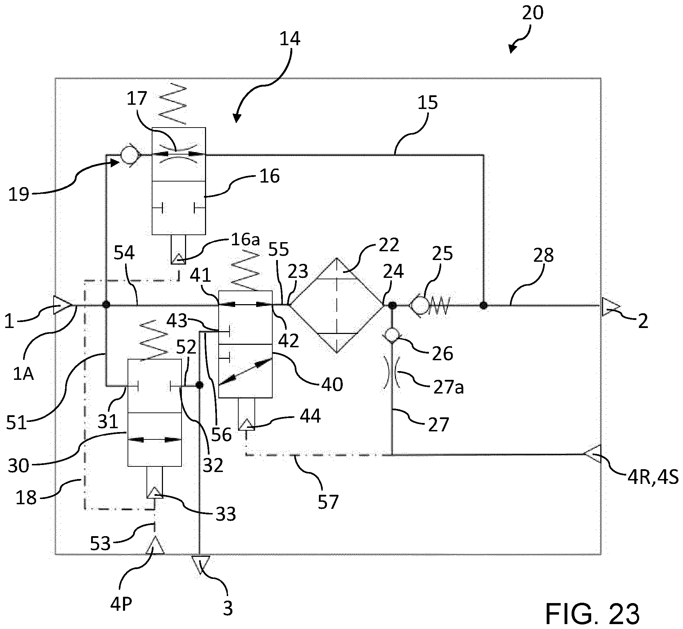

Fig. 23 is a pneumatic circuit representation of an air dryer 20 with a recharging arrangement 14 according to an embodiment. The air dryer 20 comprises a dryer inlet 1 configured to receive air from a compressor discharge line 11 (not shown in Fig. 23), a dryer outlet 2 configured to supply dried air, a desiccant cartridge 22 configured to receive the air from the dryer inlet 1 via a dryer inlet line 1A and to provide the dried air for outputting to the dryer outlet 2 via a dryer outlet line 28, and a dryer exhaust 3. Furthermore, the air dryer 20 comprises a pneumatically controlled valve assembly 30, 40 being configured to selectively exhaust air from the compressor discharge line 11 and/or from the desiccant cartridge 22 via the dryer exhaust 3. These components of the air dryer 20 were already discussed herein and may be configured and operative as previously discussed in association with, e.g., Fig. 1. In addition, the air dryer 20 comprises a regeneration line 27, the regeneration line 27 having a restrictor 27a for depressurization of the regeneration airflow and a regeneration check valve 26. The regeneration line 27 may be connected to a second control input port 4R. The second control input port 4R may also form a third control input port 4S configured to provide a pressure control signal to the switching valve control input 44 of the switching valve 40. In other words, a partial flow of the regeneration airflow may be used to pneumatically control the switching valve 40 in coordination with a regeneration mode of the air dryer 20.

As indicated above, the air dryer 20 comprises a recharging arrangement 14. The recharging arrangement 14 may be configured to selectively recharge the dryer inlet line 1A with compressed air from the dryer outlet line 28. Alternatively or additionally, the recharging arrangement 14 may be configured to selectively recharge the dryer inlet line 1A with compressed air from a supply line 12 connected to the dryer outlet 2. A recharging arrangement 14 may significantly contribute to maintain or improve an operation efficiency of a compressor connected to the dryer inlet 1. For instance, the recharging arrangement 14 may assist to provide a defined minimum pressure in the dryer inlet line 1A such that reactivation of a compressor set to an off-load state may not be affected by low pressure level in the dryer inlet line 1A. For instance, the recharging may be conducted following to a regeneration process, which may be connected to a system pressure decrease via the dryer exhaust 3. Using compressed air from the dryer outlet line 28 may turn out as an efficient and compact implementation option by using system components of the air dryer 20.

As depicted in Fig. 23, the recharging arrangement 14 may comprise a refill valve 16 arranged in a bypass line 15 connecting the dryer inlet line 1A with the dryer outlet line 28. As illustrated, the refill valve 16 may be a 2/2 way valve. Furthermore, the bypass line 15 is configured to bypass the outlet check valve 25. As further apparent from Fig. 23, a bypass check valve 19 may be positioned in the bypass line 15 between the dryer inlet line 1A and the refill valve 16, preventing bypassing of the desiccant cartridge 22 in a drying mode of the air dryer 20. Optionally, the refill valve 16 may comprise a flow restrictor 17, e.g. an orifice plate, as depicted in Fig. 23, which may assist in ensuring a fail-safe operation of the air dryer 20 by limiting a potential leakage airflow via the refill valve 16 while allowing for efficient recharging of the dryer inlet line 1A.

As illustrated in Fig. 23, the refill valve 16 may be pneumatically controllable in coordination with the purge valve 30, thus enabling a finely coordinated valve actuation. For instance, the purge valve 30 may comprise a purge valve control input 33 connected to a first control input port 4P via a purge valve control signal line 53 and the refill valve 16 may comprise a refill valve control input 16a which is also connected to the first control input port 4P, e.g. by a refill valve control signal line 18. In this way, the refill valve 16 may be actuated only in an activated state of the purge valve 30, and it may further prevent backflow via the bypass line 15 in the drying mode of the air dryer 20.

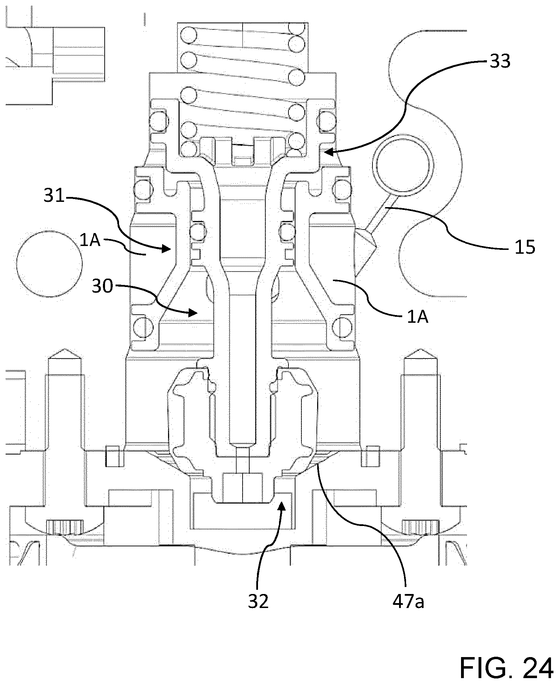

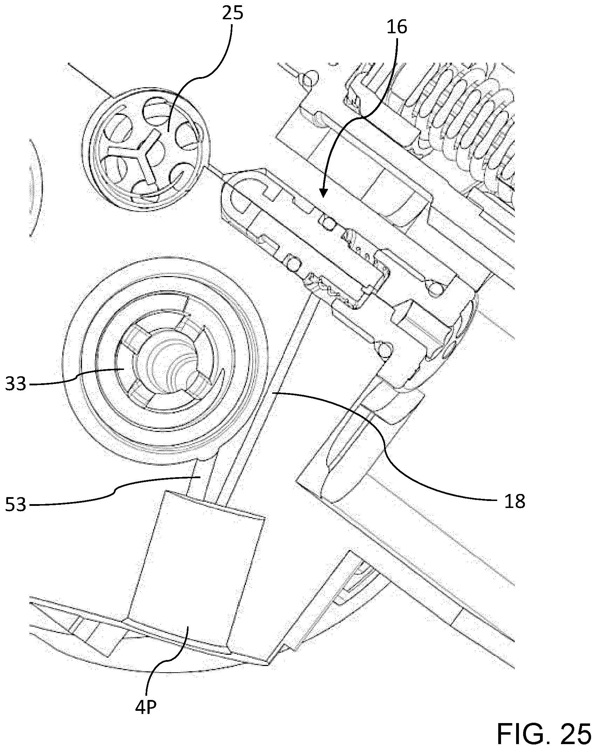

Fig. 24 and Fig. 25 provide sectional representations of the air dryer 20 in different planes showing a purge valve 30 and a refill valve 16 of the air dryer 20 according to an embodiment in order to illustrate a possible implementation of the recharging arrangement 14 described above. As depicted in Fig. 24, the dryer inlet line 1A may comprise a fluid connection to the bypass line 15. As depicted in Fig. 25, the refill valve 16 may be arranged close to the outlet check valve 25. The refill valve 16 is preferably pneumatically controllable via the first control input port 4P fluidically connected to the refill valve 16 via the refill valve control signal line 18. As apparent from Fig. 25, the first control input port 4P may be also connected to the purge valve control input 33 via the purge valve control signal line 53, thus allowing to control the purge valve 30 and the refill valve 16 in a coordinated manner.

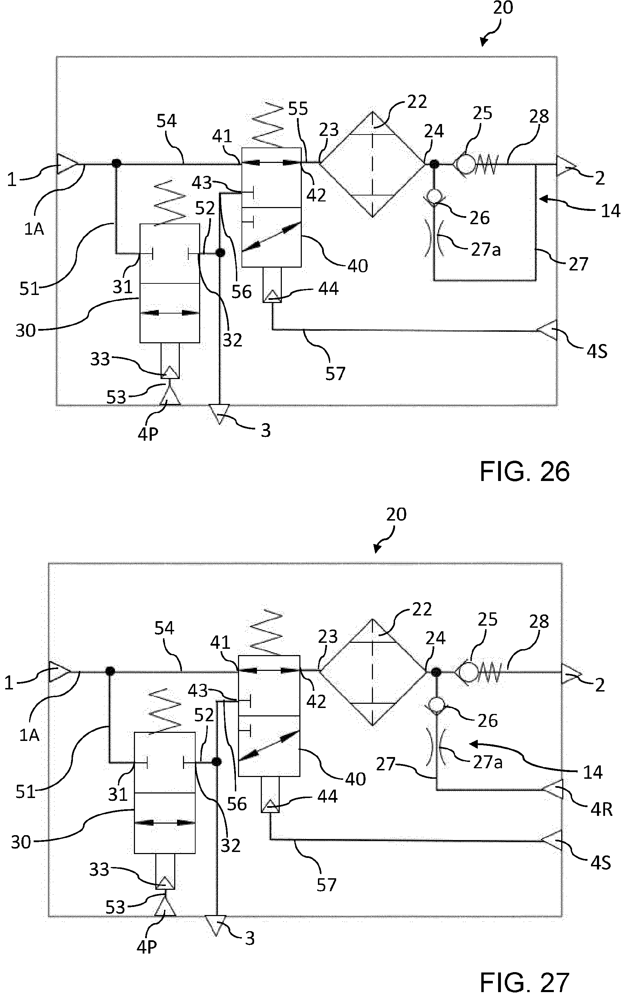

Fig. 26 is a pneumatic circuit representation of an air dryer 20 with a recharging arrangement 14 according to another embodiment. The recharging arrangement 14 depicted in Fig. 26 is configured to use a regeneration line 27 as a recharging line instead of an additional bypass line 15 as explained with reference to Figs. 23 to 25. As illustrated in Fig. 26, the regeneration line 27 is adapted to bypass the outlet check valve 25 in order to fluidically connect the dryer outlet line 28 with the dryer inlet line 1A via the desiccant cartridge 22. In this way, the air dryer 20 is configured to recharge the dryer inlet line 1A with compressed air from the dryer outlet line 28 via the regeneration line 27 depending on a pneumatic regeneration control signal.

Fig. 27 is a pneumatic circuit representation of an air dryer 20 with a recharging arrangement 14 according to another embodiment. The air dryer 20 according to Fig. 27 may comprise an essentially similar structure and operating principle compared to the air dryer 20 according to Fig. 26. In contrast to the air dryer 20 according to Fig. 26, the air dryer 20 according to Fig. 27 comprises a recharging arrangement 14 using the regeneration line 14 based on an electronic control of the regeneration and recharging process. As depicted, the regeneration line 27 may be connected to a separate further control input port 4R for selectively providing a regeneration airflow from an external source, e.g. from a supply line 12 connected to the dryer outlet 2, based on an electronic regeneration and recharging signal. The electronic regeneration and recharging signal may maintain a regeneration and recharging airflow through the regeneration line 27 for a longer time period compared to a regeneration signal optimized for desiccant cartridge regeneration in order to allow for a recharging of the dryer inlet line 1A with a regeneration airflow after deactivation of the switching valve 40 which has been activated in coordination with the regeneration process.

Various effects and advantages are attained by embodiments of the invention. For illustration, embodiments provide an air dryer system that is operable in a more versatile manner and a control method for use with such an air dryer system. The air dryer system and control method allow a regeneration to be performed without having to set the compressor to an off-load state, e.g., idle or stopped and/or allow venting of a compressor discharge line without the venting affecting a pneumatic consumer system. The air dryer system and control method provide such functionality with a low number of additional solenoid valve(s). The air dryer system and control method are readily applicable to a twin chamber air dryer configuration.

Various modifications may be made in additional embodiments. For illustration, while the pneumatic vehicle system may comprise a pneumatic braking system and/or a pneumatic levelling system, the pneumatic vehicle system may comprise alternative or additional pneumatic consumer systems, such as a sensor cleaning system, which may be part of a driver assistance system. For further illustration, while an air dryer system having a twin chamber configuration may comprise two air dryers having identical construction, the air dryer system may also comprise two air dryers having different constructions.

The disclosure also covers all further features shown in the drawings individually although they may not have been described in the afore or following description. Also, single alternatives of the embodiments described in the figures and the description and single alternatives of features thereof can be disclaimed from the subject matter of the invention or from disclosed subject matter. The disclosure comprises subject matter consisting of the features defined in the claims or the exemplary embodiments as well as subject matter comprising said features.

Furthermore, the word "comprising" does not exclude other elements or steps, and the indefinite article "a" or "an" does not exclude a plurality. A single unit or step may fulfil the functions of several features recited in the claims. The mere fact that certain measures are recited in mutually different dependent claims does not indicate that a combination of these measures cannot be used to advantage. The terms "essentially," "about," "approximately," "substantially" and the like in connection with an attribute or a value particularly also define exactly the attribute or exactly the value, respectively. Any reference signs in the claims should not be construed as limiting the scope.

### List of reference numerals (part of the application):

- 1: dryer inlet
- 1A: dryer inlet line
- 2: dryer outlet
- 2C: selection control output port
- 3: dryer exhaust
- 4: compressor control output port
- 4P: first control input port
- 4R: second control input port
- 4S: third control input port
- 10: air dryer system
- 11: compressor discharge line
- 12: supply line
- 13: compressor off-loading control line
- 14: recharging arrangement
- 15: bypass line
- 16: refill valve
- 16a: refill valve control input
- 17: flow restrictor
- 18: refill valve control signal line
- 19: bypass check valve
- 20: air dryer
- 21: air dryer housing
- 21a: cartridge holder
- 22: desiccant cartridge
- 23: desiccant cartridge port
- 24: further desiccant cartridge port
- 25: outlet check valve
- 26: regeneration check valve
- 27: regeneration line
- 27a: restrictor
- 28: dryer outlet line
- 29: selection control line
- 30: purge valve
- 31: first purge valve port
- 32: second purge valve port
- 33: purge valve control input
- 40: switching valve
- 41: first switching valve port
- 42: second switching valve port
- 43: third switching valve port
- 44: switching valve control input
- 45: valve housing
- 46a: common bottom element
- 46b: bottom area
- 46c: common exhaust volume
- 46d: silencer
- 47a: first purge valve seat
- 47b: second purge valve seat
- 47c: blocking element
- 47d: purge valve stroke
- 48a: first switching valve seat
- 48b: second switching valve seat
- 48d: switching valve stroke
- 51: first purge valve connection line
- 52: second purge valve connection line
- 53: purge valve control signal line
- 54: first switching valve connection line
- 55: second switching valve connection line
- 56: third switching valve connection line
- 57: switching valve control signal line
- 59: control valve assembly, solenoid valve assembly
- 60: first solenoid valve
- 61: first solenoid valve input port
- 62: first solenoid valve output port
- 63: first control signal line
- 64: first solenoid valve input line
- 70: second solenoid valve
- 71: second solenoid valve input port
- 72: second solenoid valve output port
- 73: second control signal line
- 74: second solenoid valve input line
- 80: third solenoid valve
- 81: third solenoid valve input port
- 82: third solenoid valve output port
- 83: regeneration control signal line
- 84: third control signal line
- 85: third solenoid valve input line
- 90: pneumatic vehicle system
- 91: compressor
- 92: compressor discharge port
- 93: compressor intake line
- 94: supply tank
- 95: pneumatic consumer system reservoir
- 96: check valve
- 97: electronic control unit
- 98: electric control signal link
- 99: control pressure signal lines
- 101: further dryer inlet
- 102: further dryer outlet
- 102C: further selection control output port
- 103: further dryer exhaust
- 104P: further first control input port
- 104R: further second control input port
- 104S: further third control input port
- 105: selection interconnection line
- 120: further air dryer
- 121: further housing
- 122: further desiccant cartridge
- 125: further outlet check valve
- 126: further regeneration check valve
- 128: further dryer outlet line
- 130: further purge valve
- 140: further switching valve
- 150: fourth solenoid valve
- 151: fourth solenoid valve input port
- 152: fourth solenoid valve output port
- 153: fourth control signal line
- 160: further fourth solenoid valve
- 161: further fourth solenoid valve input port
- 162: further fourth solenoid valve output port
- 163: further fourth control signal line
- 170: vehicle
- 171: compressor drive
- 173: pneumatic consumer system
- 174: pneumatic consumer
- 175: pneumatic consumer system valve
- 176: pneumatic consumer system connection
- 178,178': axle
- 179: wheel
- 180: braking system
- 181: brake cylinder
- 182: sensor
- 183,184: modulator
- 186: electric control interface
- 187: electric modulator control line
- 190: air spring system
- 191: air spring
- 192: sensor
- 193,194: modulator
- 196: modulator output
- 197: electric modulator control line
- 200: method
- 201: method step
- 202: method step
- 203: method step
- 210: method
- 211: method step
- 212: method step
- 213: method step
- 214: method step
- 220: commercial vehicle
- 221: pneumatic vehicle system
- 300: return spring
- 301: upper piston element
- 302: o-ring
- 303: insert
- 304: lower piston element
- 305: gasket
- 306: assembly screw
- AF: airflow
- CP1: first control pressure signal
- CP2: second control pressure signal
- CP3: third control pressure signal
- CPR: regeneration control pressure signal
- S1: first electric control signal
- S2: second electric control signal
- S3: third electric control signal
- S4: fourth electric control signal
- S4': further fourth electric control signal

## Claims

1. A vehicular air dryer system (10), comprising:
- a dryer inlet (1) configured to receive air from a compressor discharge line (11),
- a dryer outlet (2) configured to supply dried air,
- a desiccant cartridge (22) configured to receive the air from the dryer inlet (1) via a dryer inlet line (1A) and to provide the dried air for outputting to the dryer outlet (2) via a dryer outlet line (28),
- a dryer exhaust (3),
- a pneumatically controlled valve assembly (30, 40) being configured to selectively exhaust air from the compressor discharge line (11) and/or from the desiccant cartridge (22) via the dryer exhaust (3), and
- a control valve assembly (59) configured to provide control pressure signals (CP1, CP2, CP3) to at least one of the pneumatically controlled valve assembly (30, 40) and a compressor (91) connected to the compressor discharge line (11).

2. The vehicular air dryer system (10) according to claim 1, wherein the pneumatically controlled valve assembly (30, 40) comprises
- a purge valve (30) comprising a first purge valve port (31) connected to the dryer inlet line (1A) and a second purge valve port (32) connected to the dryer exhaust (3), and
- a switching valve (40) comprising a first switching valve port (41) connected to the dryer inlet line (1A), a second switching valve port (42) connected to the desiccant cartridge (22), and a third switching valve port (43) connected to the dryer exhaust (3).

3. The vehicular air dryer system (10) according to claim 2, wherein the pneumatically controlled valve assembly (30, 40) is arranged in a valve housing (45) mechanically connected to a cartridge holder (21a) receiving the desiccant cartridge (22) and wherein the purge valve (30) and the switching valve (40) are arranged in parallel in the valve housing (45).

4. The vehicular air dryer system (10) according to claim 3, wherein the purge valve (30) and the switching valve (40) extend vertically to the cartridge holder (21a).

5. The vehicular air dryer system (10) according to any of claims 2 to 4, wherein the purge valve (30) and the switching valve (40) comprise a common bottom element (46a) having a first purge valve seat (47a) for the purge valve (30) and a first switching valve seat (48a) for the switching valve (40).

6. The vehicular air dryer system (10) according to claim 5, wherein the valve housing (45) comprises a second switching valve seat (48b) for the switching valve (40).

7. The vehicular air dryer system (10) according to claim 6, wherein the valve housing (45) further comprises a second purge valve seat (47b) for the purge valve (30) and wherein the purge valve (30) or the valve housing (45) comprises a blocking element (47c) for limiting a purge valve stroke (47d) of the purge valve (30) to a lower valve stroke compared to a switching valve stroke (48d) of the switching valve (40).

8. The vehicular air dryer system (10) according to any of claims 2 to 7, wherein the purge valve (30) and the switching valve (40) share a common exhaust volume (46c) arranged in a bottom area (46b) of the valve housing (45).

9. The vehicular air dryer system (10) according to claim 8, wherein a silencer (46d) is arranged in the common exhaust volume (46c).

10. The vehicular air dryer system (10) according to any preceding claim, wherein the vehicular air dryer system (10) comprises a recharging arrangement (14) for selectively recharging the dryer inlet line (1A) with compressed air from the dryer outlet line (28) or from a supply line (12) connected to the dryer outlet (2).

11. The vehicular air dryer system (10) according to claim 10, wherein the recharging arrangement (14) comprises a refill valve (16) arranged in a bypass line (15) connecting the dryer inlet line (1A) with the dryer outlet line (28).

12. The vehicular air dryer system (10) according to claim 11, wherein the refill valve (16) is pneumatically controllable in coordination with the purge valve (30).

13. The vehicular air dryer system (10) according to claim 11 or 12, wherein the refill valve (16) comprises a flow restrictor (17).

14. The vehicular air dryer system (10) according to claim 10, further comprising a regeneration line (27) bypassing an outlet check valve (25) in the dryer outlet line (28), wherein the vehicular air dryer system (10) is configured to recharge the dryer inlet line (1A) with compressed air from the dryer outlet line (28) via the regeneration line (27).

15. An air dryer (20) for a vehicular air dryer system (10) according to any preceding claim, the air dryer (20) comprising:
- a dryer inlet (1) configured to receive air from a compressor discharge line (11),
- a dryer outlet (2) configured to supply dried air,
- a desiccant cartridge (22) configured to receive the air from the dryer inlet (1) via a dryer inlet line (1A) and to provide the dried air for outputting to the dryer outlet (2) via a dryer outlet line (28),
- a dryer exhaust (3), and
- a pneumatically controlled valve assembly (30, 40) being configured to selectively exhaust air from the compressor discharge line (11) and/or from the desiccant cartridge (22) via the dryer exhaust (3).

16. A pneumatic vehicle system (90), comprising:
- a compressor (91) connected to the dryer inlet (1) via a compressor discharge line (11),
- the vehicular air dryer system (10) according to any one of claims 1 to 14,
- a pneumatic consumer system (173) connected to the dryer outlet (2) via a supply line (12), and
- an electronic control unit (97) configured to control the control valve assembly (59).

17. A vehicle (170), in particular a commercial vehicle (220), comprising the pneumatic vehicle system (90) according to claim 16.
